# EUROPÄISCHE PATENTSCHRIFT

(11) **EP 4 442 537 B1**
(45) Veröffentlichungstag und Bekanntmachung des Hinweises auf die Patenterteilung: **24.06.2026**
(21) Anmeldenummer: 24167797.0
(22) Anmeldetag: 28.03.2024
(51) Int. Cl.: B62D 1/181, B62D 1/187, B62D 1/189

(54) **VERSTELLEINRICHTUNG FÜR LENKSÄULEN VON FAHRZEUGEN**
ADJUSTMENT DEVICE FOR STEERING COLUMNS OF VEHICLES
DISPOSITIF DE RÉGLAGE POUR COLONNES DE DIRECTION DE VÉHICULES

(30) Priorität: 06.04.2023 DE 102023001452
(43) Veröffentlichungstag der Anmeldung: 09.10.2024
(73) Patentinhaber: Willi Elbe Gelenkwellen GmbH & Co. KG, 71732 Tamm (DE)
(72) Erfinder: Sedlmeier, Ralf, 74385 Pleidelsheim (DE); Hauhoff, Jörg, 72655 Altdorf (DE); Herrlich, Thomas, 85640 Putzbrunn (DE); Antonov, Aleksandar, 4269 Izbeglii (BG)
(74) Vertreter: Patentanwälte Jackisch-Kohl und Kohl

(56) Entgegenhaltungen:
- CN-A- 115 743 285
- DE-A1- 102018 213 679
- JP-A- 2019 104 368
- US-A1- 2004 144 192

## Beschreibung

Die Erfindung betrifft eine Verstelleinrichtung für Lenksäulen von Fahrzeugen nach dem Oberbegriff des Anspruches 1. Dokument DE102018213679A1 offenbart den Oberbegriff des unabhängigen Anspruchs 1.

Die Verstelleinrichtung dient dazu, das Lenkelement, beispielsweise ein Lenkrad, eines Fahrzeuges an die Sitzposition des Fahrers anzupassen.

Der Lenkstrang der Verstelleinrichtung ist zumindest in seiner Länge einstellbar. An solche Verstelleinrichtungen werden hinsichtlich der Baugröße immer strengere Anforderungen gestellt, insbesondere im Hinblick darauf, dass der Einbauraum insbesondere in Elektrofahrzeugen für solche Verstelleinrichtungen häufig nur klein ist. Dabei sollen solche Verstelleinrichtung kostengünstig in der Herstellung sein, ohne dass die Funktionalität der Verstelleinrichtungen leidet.

Der Erfindung liegt die Aufgabe zugrunde, die gattungsgemäße Verstelleinrichtung so auszubilden, dass trotz kostengünstiger Fertigung die Verstelleinrichtung nur einen geringen Einbauraum ohne Beeinträchtigung der Funktionalität erfordert.

Diese Aufgabe wird bei der gattungsgemäßen Verstelleinrichtung erfindungsgemäß mit den kennzeichnenden Merkmalen des Anspruches 1 gelöst.

Die erfindungsgemäße Verstelleinrichtung ist so ausgebildet, dass zur Längenverstellung des Lenkstranges nur eine einzige Antriebseinheit erforderlich ist. Mit ihr wird das Innenrohr axial verschoben, um die Länge des Lenkstranges zu verändern. Am Innenrohr wird das Lenkelement befestigt, das mit dem Innenrohr somit in die günstigste Fahrposition eingestellt werden kann. Da nur eine Antriebseinheit für die Längenverstellung erforderlich ist, hält sich der konstruktive Aufwand der Verstelleinrichtung in Grenzen.

Zudem benötigt die Verstelleinrichtung entsprechend kleinen Bauraum, so dass die Verstelleinrichtung kompakt ausgebildet ist und auch bei beengten Einbauverhältnissen eingesetzt werden kann.

Eine besonders einfache, platzsparende Bauweise ergibt sich, wenn das Führungsrohr, in dem das Innenrohr verschiebbar gelagert ist, einen axial verlaufenden Schlitz aufweist, durch den ein fest mit dem Innenrohr verbundener Mitnehmer ragt, an den die Antriebseinheit angebunden werden kann. Bei der Axialverstellung des Innenrohres wird der Mitnehmer längs des Schlitzes des Führungsrohres bewegt.

Eine kostengünstige, nur wenig Bauraum benötigende Ausbildung ergibt sich, wenn als Antriebseinheit ein Gewindespindel-Antrieb eingesetzt wird. Auf seiner Gewindespindel sitzt eine Antriebsmutter, die in vorteilhafter Weise fest mit dem Mitnehmer des Innenrohres verbunden ist. Durch Drehen der Gewindespindel wird die Antriebsmutter je nach Drehrichtung der Gewindespindel verschoben, wodurch das Innenrohr über den mit der Antriebsmutter verbundenen Mitnehmer entsprechend axial verschoben wird.

Bei einer weiteren erfindungsgemäßen Ausbildung lässt sich der Lenkstrang um eine Schwenkachse schwenken, über die der Lenkstrang mit der Halterung verbunden ist. Durch Schwenken um diese Schwenkachse lässt sich der Lenkstrang in Höhenrichtung verstellen, um das Lenkelement in unterschiedlichen Höhen positionieren zu können. Das Innenrohr ist mit Abstand von dieser Schwenkachse mit einem Hubelement verbunden, an dem ein Verstellelement um eine weitere Achse schwenkbar gelagert ist. Diese weitere Achse liegt parallel zur Schwenkachse des Lenkstranges. Mit dem Verstellelement lässt sich somit der Lenkstrang um seine Schwenkachse in der gewünschten Richtung verschwenken.

Das Verstellelement ist mit einem entsprechenden Höhen-Verstellantrieb antriebsverbunden, mit dem das Verstellelement in der gewünschten Richtung verschwenkt werden kann. Der Höhenverstell-Antrieb lässt sich an der Halterung der Verstelleinrichtung einfach befestigen.

Das Verstellelement ist in vorteilhafter Weise um eine Schwenkachse schwenkbar an der Halterung gelagert, um welche das Verstellelement bei der Höhenverstellung des Lenkstranges schwenkt.

Die Schwenkachse des Verstellelementes liegt in vorteilhafter Weise parallel zur weiteren Schwenkachse des Hubelementes.

Um eine einfache, raumsparende Bauweise zu ermöglichen, ist das Verstellelement mit einem quer zu seiner Schwenkachse verlaufenden abstehenden Hebelarm versehen, an dem der Höhenverstell-Antrieb angreift.

Der Hebelarm kann so vorgesehen sein, dass er beispielsweise unmittelbar benachbart zur Halterung des Lenkstranges angeordnet sein kann.

Zu einer kompakten Bauform trägt in vorteilhafter Weise bei, wenn das Verstellelement das Hubelement teilweise umgibt.

Bevorzugt ist das Verstellelement mit wenigstens einer Gleitführung versehen, in die wenigstens ein dem Hubelement zugeordnetes Gleitstück eingreift. Bei der Höhenverstellung des Lenkstranges wird das Verstellelement um seine Schwenkachse verschwenkt, wobei gleichzeitig über die weitere Achse eine Verschwenkung des Verstellelementes relativ zum Hubelement stattfindet. Die Gleitführung und das Gleitstück sorgen dann dafür, dass beim Schwenkvorgang des Verstellelementes das Gleitstück in erforderlichem Maße in der Gleitführung des Verstellelementes gleiten kann.

Die Gleitführung verläuft in vorteilhafter Weise senkrecht zur Schwenkachse des Verstellelementes.

Da das Verstellelement gegenüber dem Hubelement bei der Höhenverstellung des Lenkstranges geschwenkt wird, ändert sich auch die Raumlage der Gleitführung. Damit das Gleitstück des Hubelementes der Lageänderung der Gleitführung folgen kann, ist es vorteilhaft um eine Achse parallel zur Schwenkachse drehbar angeordnet.

Eine solche Höhenverstellung ist in vorteilhafter Weise dann sichergestellt, wenn das Verstellelement, insbesondere wenn es das Hubelement wenigsten teilweise umgibt, mit diametral einander gegenüberliegenden Gleitführungen versehen ist, in die Gleitstücke des Hubelementes eingreifen. Durch die Führung des Verstellelementes auf zwei diametral einander gegenüberliegenden Seiten ist gewährleistet, dass das Verstellelement zuverlässig gegenüber dem Hubelement geschwenkt werden kann.

In vorteilhafter Weise ist der Abstand zwischen der Schwenkachse des Verstellelementes und der weiteren Achse des Hubelementes kleiner als der Abstand der Schwenkachse des Lenkstranges von der weiteren Achse und/oder der Schwenkachse des Verstellelementes.

Die Gleitführung und das Gleitstück ermöglichen in erfindungsgemäßer Ausbildung einen Axialausgleich beim Verschwenken des Lenkstranges bei dessen Höhenverstellung.

Die Hauptkrafteinleitung erfolgt in der Schwenkachse des Lenkstranges. Der axiale Ausgleich erfolgt durch die unterschiedlichen Radien in der weiteren Achse des Hubelementes. Dadurch können die hohen Belastungen aufgrund der großen Hebellängen bewältigt werden. Sie kommen dadurch zustande, dass die Schwenkachse des Lenkstranges und die Schwenkachse des Verstellelementes bzw. die weitere Achse des Hubelementes großen Abstand voneinander haben. Vorteilhaft befinden sich die genannten Achsen an unterschiedlichen Endbereichen der Halterung.

Zu einer kompakten Ausbildung trägt bei, wenn der Höhenverstell-Antrieb ein Gewindespindel-Antrieb ist, auf dessen Gewindespindel eine Antriebsmutter sitzt, auf der das Verstellelement schwenkbar gelagert ist. Bei der Schwenkbewegung kann daher das Verstellelement auf der Antriebsmutter entsprechend schwenken.

Der Anmeldungsgegenstand ergibt sich nicht nur aus dem Gegenstand der einzelnen Patentansprüche, sondern auch durch alle in den Zeichnungen und der Beschreibung offenbarten Angaben und Merkmale.

Weitere Merkmale der Erfindung ergeben sich aus den weiteren Ansprüchen, der Beschreibung und den Zeichnungen.

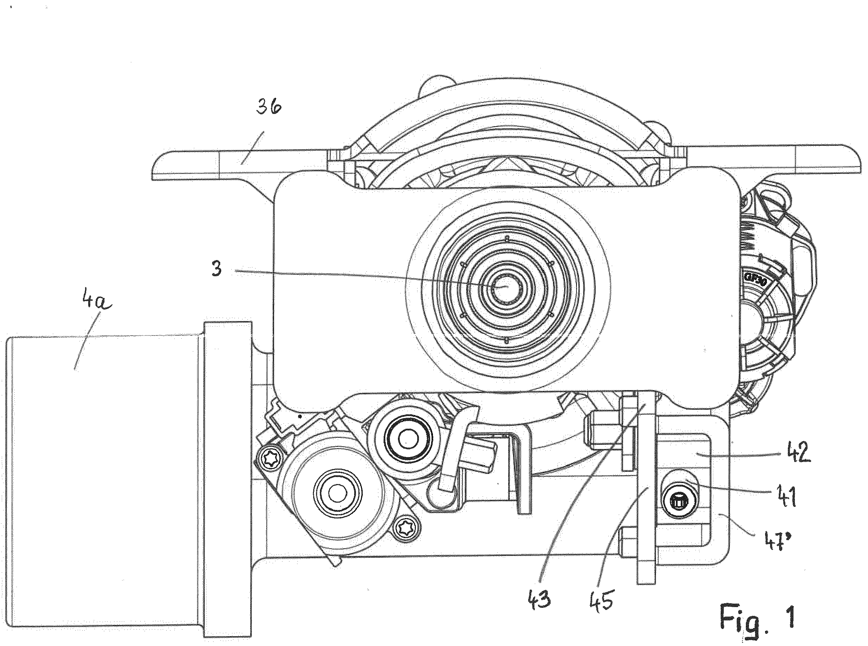

Die Erfindung wird nachstehend anhand eines in den Zeichnungen dargestellten Ausführungsbeispieles näher erläutert. Es zeigen
- Fig. 1: in Stirnansicht eine erfindungsgemäße Lenksäulen-Verstelleinrichtung,
- Fig. 2: eine Seitenansicht der Lenksäulen-Verstelleinrichtung gemäß Fig. 1,

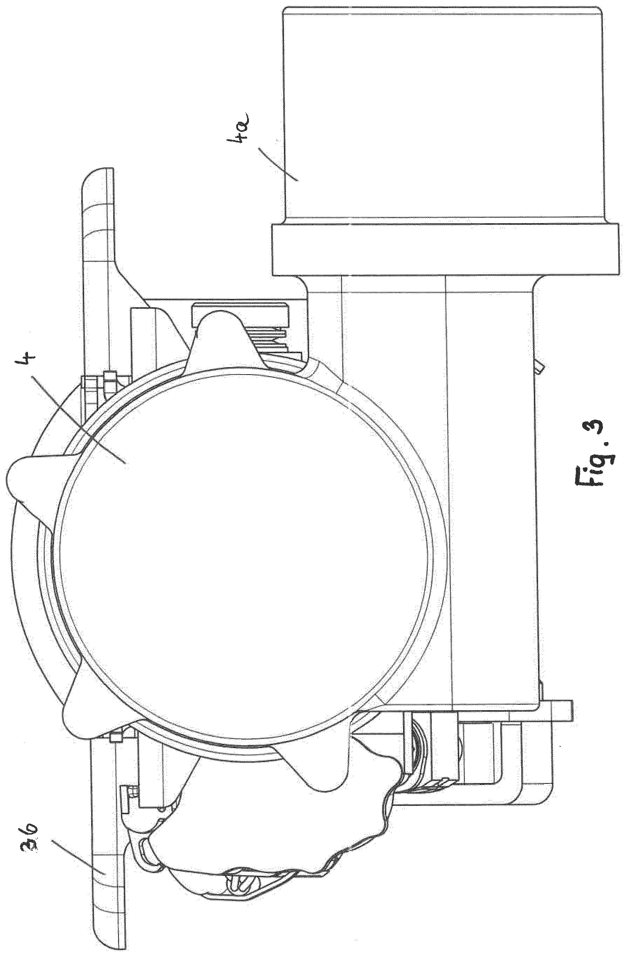

- Fig. 3: eine Ansicht in Richtung des Pfeiles III in Fig. 2,
- Fig. 4: eine Draufsicht auf die Lenksäulen-Verstelleinrichtung gemäß Fig. 1,

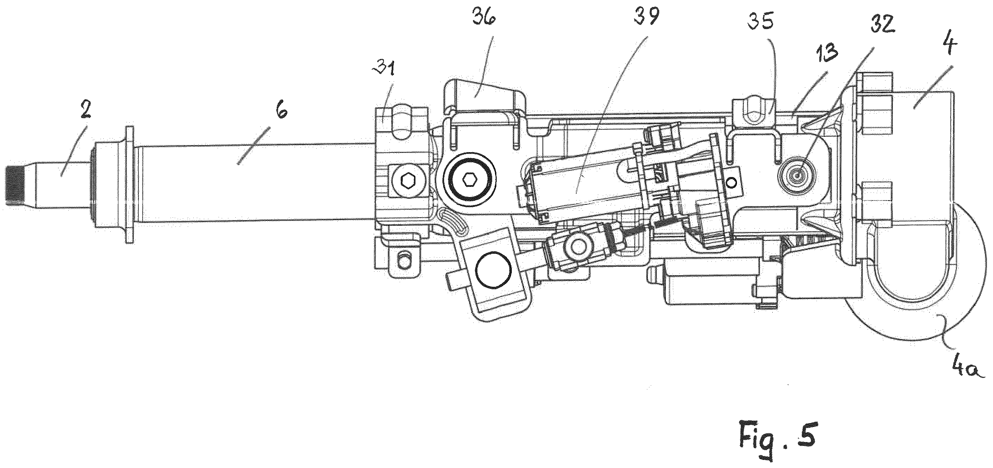

- Fig. 5: eine Seitenansicht der erfindungsgemäßen Lenksäulen-Verstelleinrichtung,
- Fig. 6: in Seitenansicht einen inneren Lenkstrang der erfindungsgemäßen Lenksäulen-Verstelleinrichtung,
- Fig. 7: eine Schiebeverzahnung des inneren Lenkstranges gemäß Fig. 6,
- Fig. 8: die Lenksäulen-Verstelleinrichtung in Fahrposition,
- Fig. 9: die Lenksäulen-Verstelleinrichtung in Verstauposition,

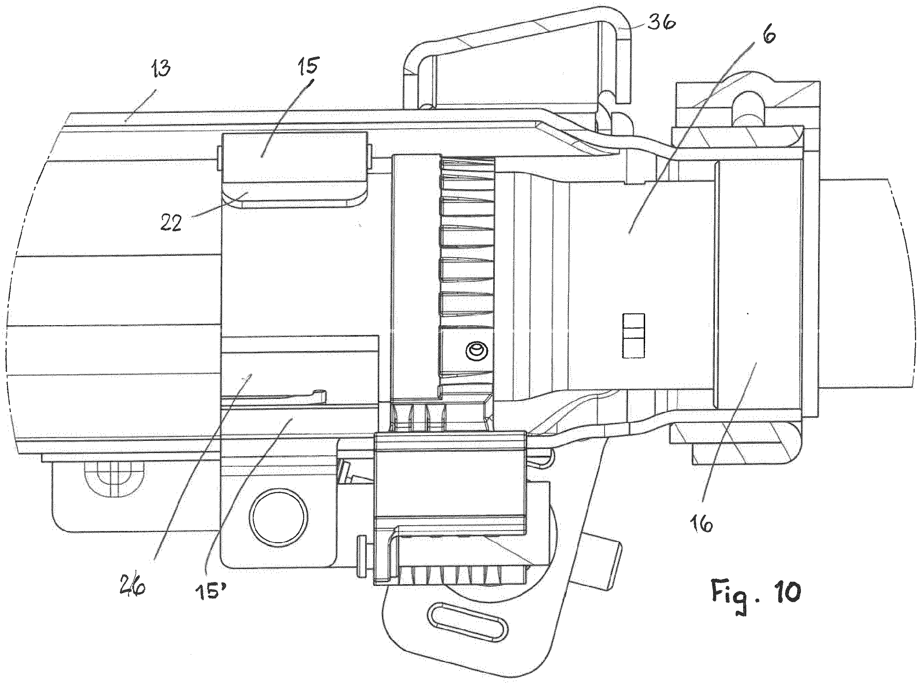

- Fig. 10: in vergrößerter Darstellung das lenkspindelseitige Ende eines Führungsrohres, in welches ein Mantelrohr eingreift, durch welche sich eine Lenkspindel der Lenksäulen-Verstelleinrichtung erstreckt,
- Fig. 11: eine Stirnansicht des Führungsrohres mit Mantelrohr und Lenkspindel gemäß Fig. 10,
- Fig. 12: die erfindungsgemäße Lenksäulen-Verstelleinrichtung nach einem Crash,
- Fig. 13: einen Teil der erfindungsgemäßen Lenksäulen-Verstelleinrichtung mit Scherstiften,
- Fig. 14: einen Teil der erfindungsgemäßen Lenksäulen-Verstelleinrichtung in Fahrposition mit einer Crasheinrichtung,
- Fig. 15: in einer Darstellung entsprechend Fig. 14 die Lenksäulen-Verstelleinrichtung gemäß Fig. 14 nach einem Crash,
- Fig. 16: die Lenksäulen-Verstelleinrichtung in einer oberen Lenkradverstellposition,
- Fig. 17: in einer Darstellung entsprechend Fig. 16 die Lenksäulen-Verstelleinrichtung in einer mittleren Lenkradposition,
- Fig. 18: in einer Darstellung entsprechend Fig. 16 die Lenksäulen-Verstelleinrichtung in einer unteren Lenkradposition,
- Fig. 19: in vergrößerter Darstellung einen Teil der Lenksäulen-Verstelleinrichtung gemäß Fig. 17,
- Fig. 20: eine Stirnansicht der Lenksäulen-Verstelleinrichtung mit Gleitführungen,
- Fig. 21: in Stirnansicht die Schwenklagerung der Lenksäulen-Verstelleinrichtung,
- Fig. 22: eine Draufsicht auf einen Schwenklagerbereich eines Verstellelementes der Lenksäulen-Verstelleinrichtung,
- Fig. 23: den Bereich gemäß Fig. 22 in Draufsicht,
- Fig. 24: einen Lagerbock der Lenksäulen-Verstelleinrichtung,
- Fig. 25: in einer Darstellung entsprechend Fig. 24 eine zweite Ausführungsform eines Lagerbockes der Lenksäulen-Verstelleinrichtung,
- Fig. 26: in perspektivischer und schematischer Darstellung einen Aktuator der Lenksäulen-Verstelleinrichtung,
- Fig. 27: in einer Darstellung entsprechend Fig. 27 den Aktuator, der an einem Führungsrohr der Lenksäulen-Verstelleinrichtung befestigt ist,
- Fig. 28: einen an einem Mantelrohr der Lenksäulen-Verstelleinrichtung befestigten Aktuator in vereinfachter Darstellung,
- Fig. 29: in vereinfachter Darstellung einen nahe am Lenkrad vorgesehenen Aktuator der Lenksäulen-Verstelleinrichtung,
- Fig. 30: in vereinfachter Darstellung die Anordnung eines Sensors nahe einem Lenkrad,
- Fig. 31: in Seitenansicht das mit der Lenksäulen-Verstelleinrichtung verbundene Lenkrad in Fahrposition,
- Fig. 32 und Fig. 33: in verschiedenen perspektivischen Darstellungen das Lenkrad gemäß Fig. 31 in Fahrposition,
- Fig. 34 bis Fig. 36: in Darstellungen entsprechend den Fig. 31 bis 33 das Lenkrad in Verstauposition,

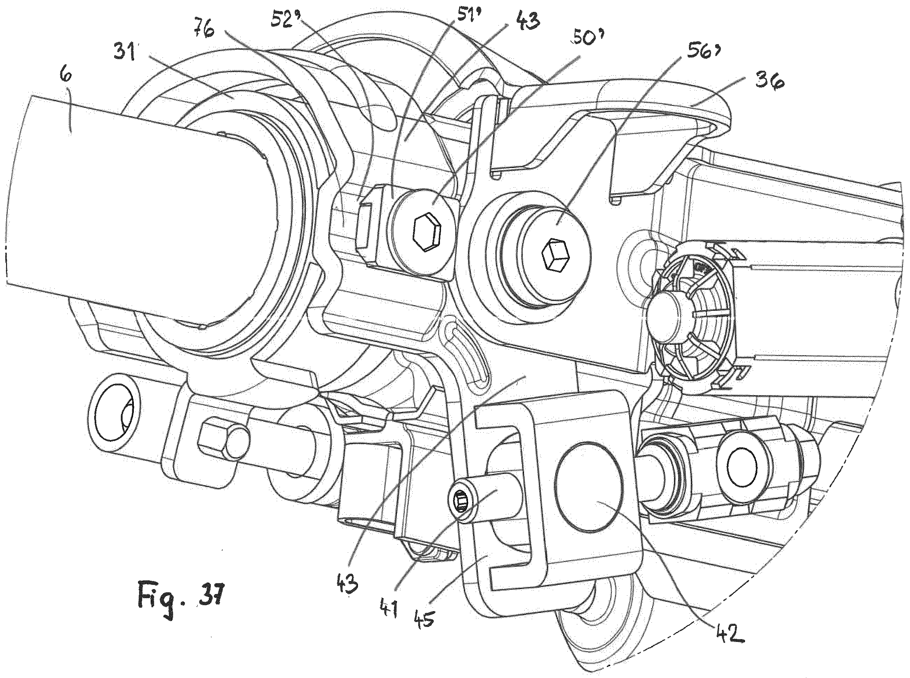

- Fig. 37: in perspektivischer Darstellung einen Verstellhebel für die Höhenverstellung der Lenksäulen-Verstelleinrichtung,

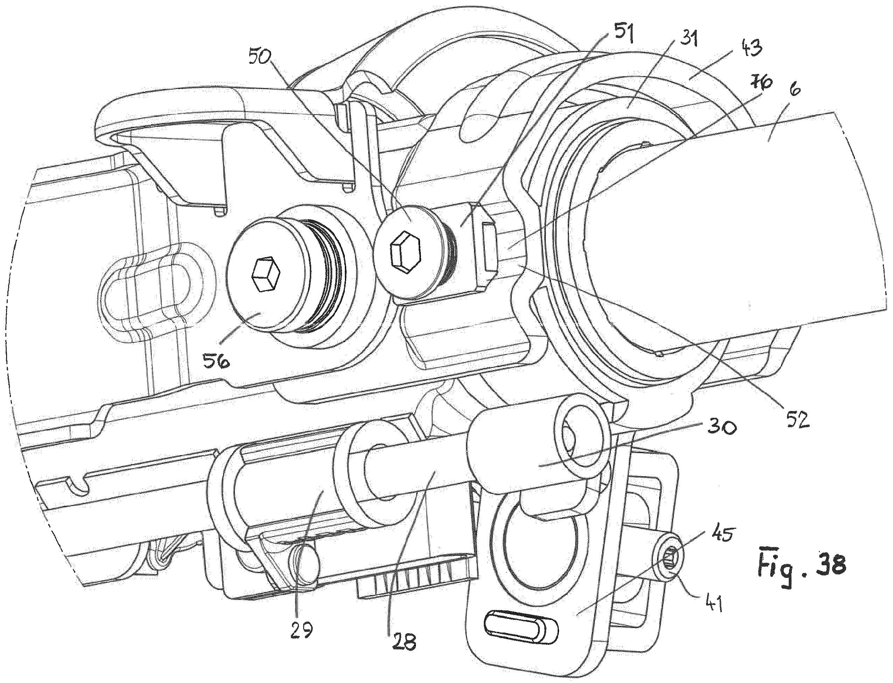

- Fig. 38: den Verstellhebel gemäß Fig. 37 in einer anderen perspektivischen Darstellung,

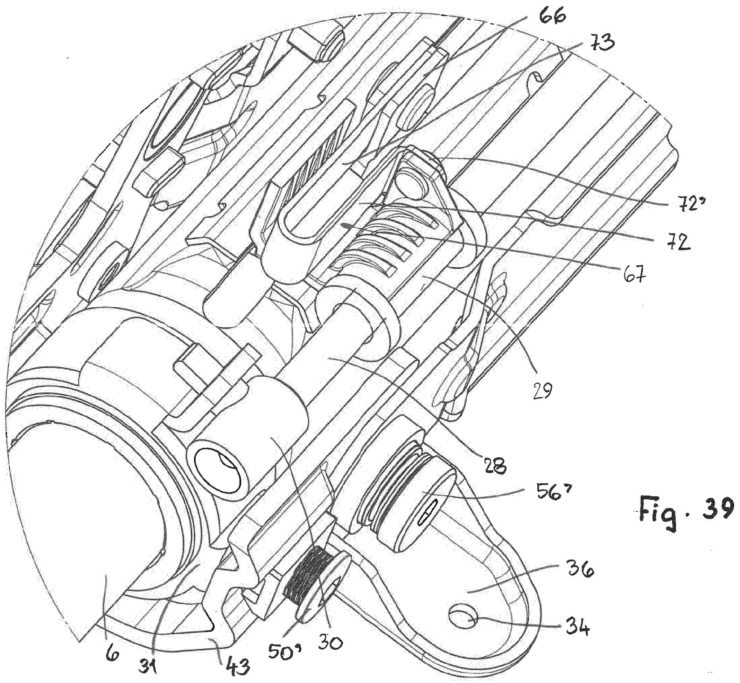

- Fig. 39: in vergrößerter Darstellung eine Crasheinrichtung der Lenksäulen-Verstelleinrichtung.

Die elektrische Lenksäulen-Verstelleinrichtung hat eine hohe Steifigkeit und ist kompakt ausgebildet. Sie kann darum insbesondere in Bauräume mit begrenztem Volumen eingebaut werden. Die Verstelleinrichtung ist insbesondere für ein teilautonomes Fahren mit Fahrzeug geeignet, bei denen die Lenkung mittels eines Lenkelementes, wie ein Lenkrad, nicht mechanisch an die lenkbaren Fahrzeugräder weitergegeben wird, sondern elektrisch vorgenommen wird.

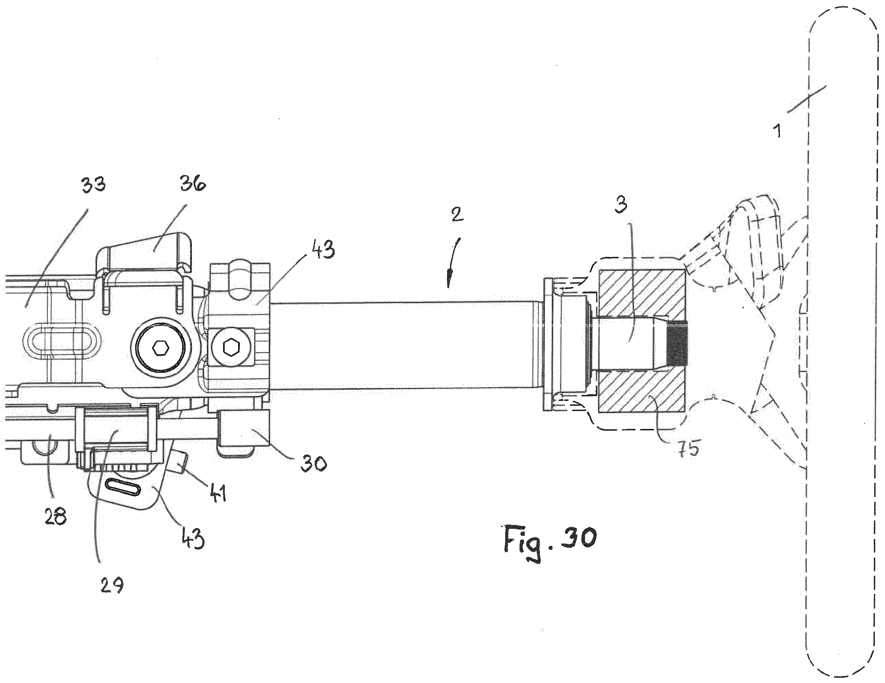

Die Verstelleinrichtung hat ein Lenkelement 1, das drehfest auf einem Lenkstrang 2 befestigt ist (Fig. 30). Das Lenkelement 1 ist vorteilhaft ein Lenkrad, kann aber auch jede andere geeignete Ausbildung haben. Die Verstelleinrichtung ist so ausgebildet, dass das Lenkelement 1 zur Anpassung an die Position des Fahrers sowohl in Längsrichtung des Lenkstranges 2 als auch quer dazu in Höhenrichtung eingestellt werden kann.

Der Lenkstrang 2 hat eine Lenkspindel 3, auf deren freiem Ende das Lenkelement 1 in bekannter Weise befestigt ist. Die Lenkspindel kann in ihrer Längsrichtung verschoben werden, um das Lenkelement 1 in unterschiedliche Längspositionen verstellen zu können.

Um dem Fahrer trotz der elektrischen Verstellung der lenkbaren Fahrzeugräder das Gefühl einer unmittelbaren Lenkung der Fahrzeugräder zu vermitteln, ist die Verstelleinrichtung mit einem Aktuator 4 versehen, der beim Drehen des Lenkstranges 2 mittels des Lenkelementes 1 ein Gegendrehmoment erzeugt. Der Fahrer hat dadurch das Gefühl, dass er die Räder des Fahrzeuges mechanisch lenkt.

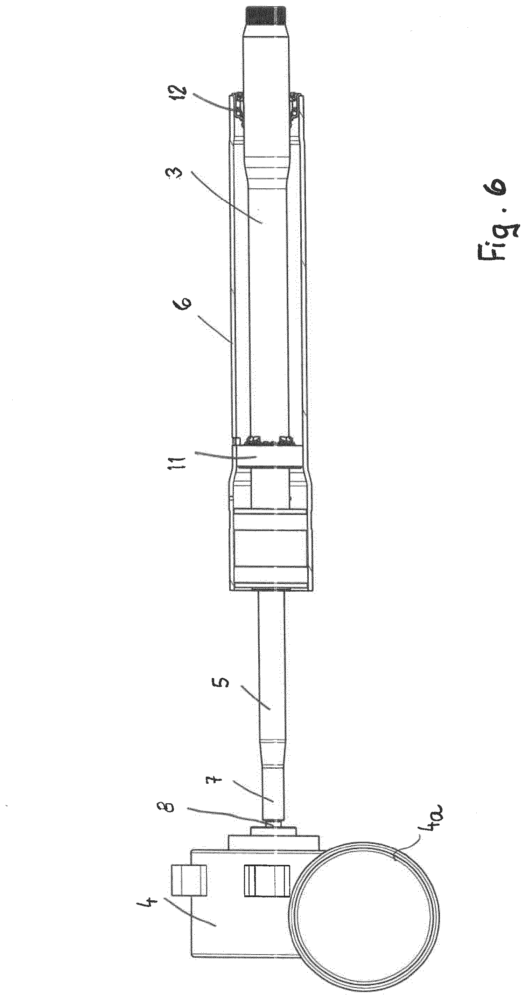

Der Aktuator 4 hat eine Antriebseinheit 4a, deren Achse senkrecht zur Achse des Aktuators 4 verläuft und die eine Zahnwelle 5 drehbar antreibt, die in ein Mantelrohr 6 ragt (Fig. 6).

Fig. 6 zeigt den inneren Lenkstrang der Verstelleinrichtung. Die Zahnwelle 5 ist über eine Kupplung 7 mit einer Welle 8 des Aktuators 4 drehfest verbunden. Die Zahnwelle 5 und die Lenkspindel 3 sind drehfest miteinander verbunden, aber axial gegeneinander verschiebbar.

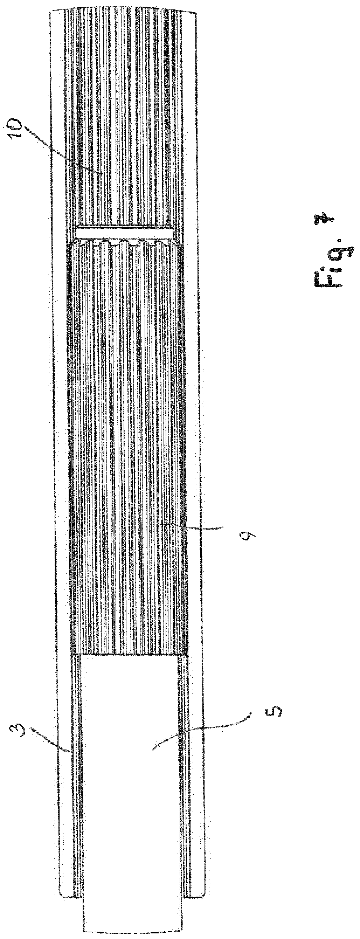

Fig. 7 zeigt diese teleskopische drehfeste Verbindung zwischen der Zahnwelle 5 und der Lenkspindel 3. Die Zahnwelle 5 hat eine über einen Teil ihrer Länge verlaufende axiale Außenverzahnung 9, die eine entsprechende Innenverzahnung 10 der Lenkspindel 3 eingreift. Die beiden ineinandergreifenden Verzahnungen 9, 10 bilden eine Schiebeverzahnung, die es ermöglicht, dass die Lenkspindel 3 axial gegenüber der Zahnwelle 5 verschoben werden kann. Eine Verdrehung der Lenkspindel 3 gegenüber der Zahnwelle 5 ist wegen der Verzahnungen 9, 10 nicht möglich.

Innerhalb des Mantelrohres 6 ist die Lenkspindel 3 durch Drehlager 11, 12 drehbar abgestützt (Fig. 6). Das Drehlager 11 befindet sich nahe dem dem Aktuator 4 zugewandten Ende des Mantelrohres 6, während das Drehlager 12 am anderen Ende des Mantelrohres 6 vorgesehen ist. Die Anordnung und die Zahl der Drehlager 11, 12 ist selbstverständlich nur beispielhaft zu verstehen.

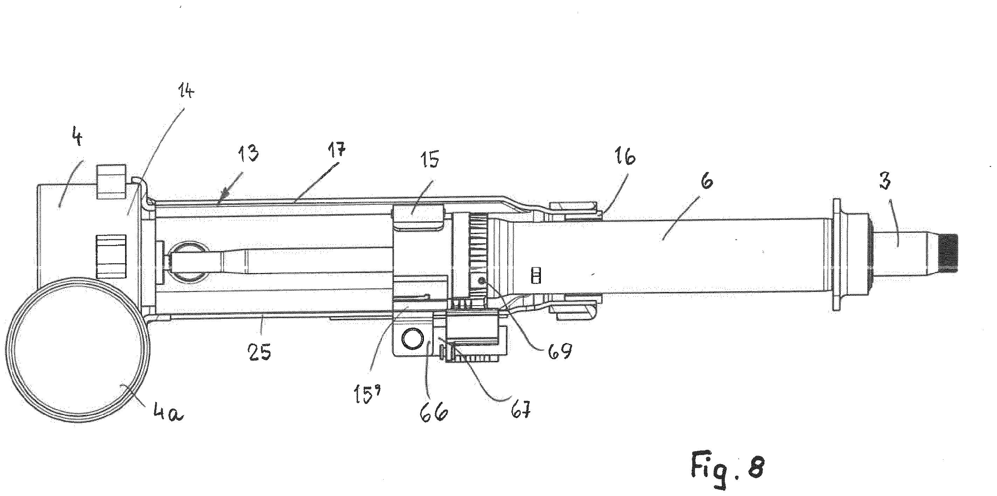

Das Mantelrohr 6 ragt in ein Führungsrohr 13 (Fig. 8), das an einem Gehäuse 14 des Aktuators 4 befestigt ist.

Das Führungsrohr 13 umgibt das Mantelrohr 6 mit Abstand, das axial gegenüber dem Führungsrohr 13 verschiebbar ist.

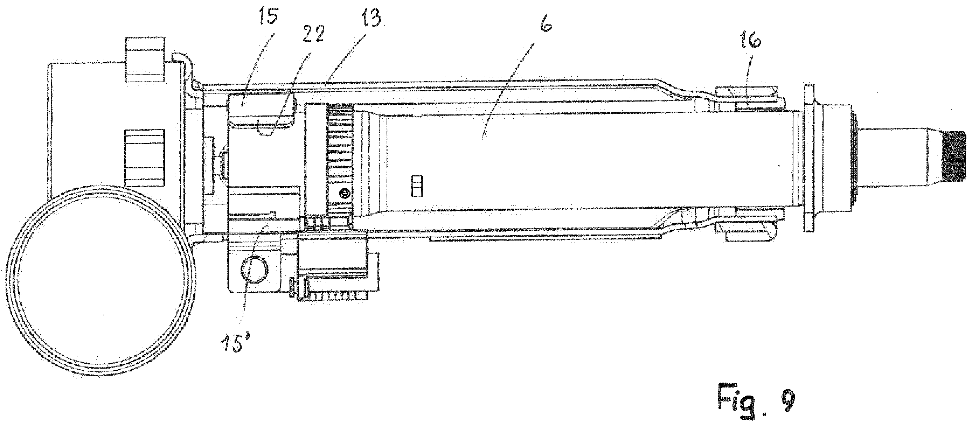

In der Stellung gemäß Fig. 8 ist das Mantelrohr 6 maximal aus dem Führungsrohr 13 herausgefahren. Fig. 9 zeigt die eingefahrene Stellung des Mantelrohres 6. In der Stellung gemäß Fig. 8 befindet sich das Lenkelement 1 in seiner Fahrposition, während in der Stellung gemäß Fig. 9 das Lenkrad seine Verstauposition einnimmt.

Zur Führung des Mantelrohres 6 im Führungsrohr 13 sind Führungselemente 15, 15', 16 vorgesehen. Die Führungselemente 15, 15' sind an der Außenseite des Mantelrohres 6 und das Führungselement 16 an der Innenseite des Führungsrohres 13 angeordnet. Die Führungselemente 15, 15' sind an dem innerhalb des Führungsrohres 13 befindlichen Ende des Mantelrohres 6 angeordnet, während das Führungselement 16 am freien Ende des Führungsrohres 13 befestigt ist.

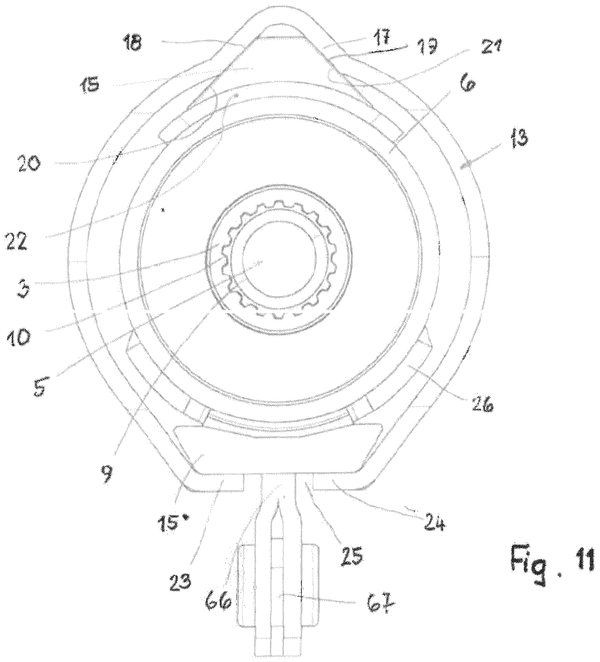

Wie Fig. 11 zeigt, ist das Führungsrohr 13 mit einer oberen Ausbuchtung 17 versehen, die durch einen entsprechenden plastisch verformten Bereich des Mantels des Führungsrohres 13 gebildet wird. Die Ausbuchtung 17 erstreckt sich zumindest über den maximalen Verschiebeweg des Mantelrohres 6. Gemäß Fig. 8 reicht der Ausbuchtung 17 bis nahe an das Gehäuse 14 des Aktuators 4 und hat axialen Abstand vom freien Ende des Führungsrohres 13.

Die Ausbuchtung 17 hat zwei als Gleitflächen für das obere Führungselement 15 des Mantelrohres 6 dienende Seitenwände 18, 19, an denen das Führungselement 15 mit entsprechenden Seitenwänden 20, 21 flächig anliegt. Dadurch wird das Mantelrohr 6 beim Verschiebevorgang einwandfrei im Führungsrohr 13 geführt.

Das Führungselement 15 ist, wie Fig. 11 zeigt, im Querschnitt prismatisch ausgebildet und in geeigneter Weise auf dem Mantelrohr 6 befestigt. Im Ausführungsbeispiel setzt das prismatische Führungselement 15 auf einem gekrümmten flachen Befestigungsteil 22, das an der Außenseite des Mantelrohres 6 anliegend fest mit ihm verbunden ist.

Das Führungselement 15 und das Befestigungsteil 22 erstrecken sich über eine ausreichende axiale Länge des Mantelrohres 6, so dass es im Bereich seines innerhalb des Führungsrohres 13 liegenden Endes zuverlässig geführt werden kann.

Dem Führungselement 15 liegt das untere Führungselement 15' diametral gegenüber. Es ist ebenfalls beispielhaft prismatisch ausgebildet (Fig. 11) und liegt auf zwei mit Abstand einander gegenüberliegenden Randabschnitten 23, 24 des Führungsrohres 13 auf. Sie sind Teil eines abgeflachten Wandabschnittes des Führungsrohres 13, in dem sich ein in Axialrichtung verlaufender Schlitz 25 befindet, der durch die Randabschnitte 23, 24 seitlich begrenzt wird. Der Schlitz 25 ist wie die Ausbuchtung 17 so lang, dass das Mantelrohr 6 seinen maximalen Verschiebeweg gegenüber dem Führungsrohr 13 ausführen kann. Das untere Führungselement 15' ist wiederum in geeigneter Weise an der Außenwand des Mantelrohres 6 befestigt.

Die beiden Randabschnitte 23, 24 des Führungsrohres 13 liegen auf gleicher Höhe mit Abstand einander gegenüber und sind so angeordnet, dass ihre Auflageflächen für das Führungselement 16 ebenfalls auf gleicher Höhe liegen.

Eine einfache Befestigung des Führungselementes 15' am Mantelrohr 6 ist dann möglich, wenn wie aus Fig. 11 hervorgeht, ein gekrümmtes flaches Befestigungsteil 26 vorgesehen wird, das über seine Länge und Breite flächig an der Außenseite des Mantelrohres 6 anliegend an ihm befestigt ist.

Auch das Führungselement 16 ist in Axialrichtung und in Umfangsrichtung ausreichend lang bzw. breit, um eine zuverlässige Führung des Mantelrohres 6 im Führungsrohr 13 sicherzustellen.

Es wird darauf hingewiesen, dass die Angaben "oben" und "unten" für die Position der Führungselemente 15, 15', 16 sich auf die Darstellung gemäß den Zeichnungen bezieht. In der Einbaulage der Verstelleinrichtung können die Führungselemente 15, 15', 16 auch eine andere Position einnehmen.

Die Ausbuchtung 17 und der Schlitz 25 befinden sich in einem Bereich des Führungsrohres 13, der größeren Durchmesser aufweist als der das Führungselement 16 aufweisende Teil des Führungsrohres 13. Dieser im Durchmesser kleinere Teil des Führungsrohrs 13 bildet den Endabschnitt des Führungsrohres 13 und ist wesentlich kürzer als der restliche, im Durchmesser größere Teil des Führungsrohres 13 (Fig. 8).

Das Führungselement 16 wird durch eine Führungsbuchse gebildet, die an der Innenwand des Führungsrohres 13 in dessen Endabschnitt befestigt ist und das Mantelrohr 6 umgibt. Das buchsenförmige Führungselement 16 führt das Mantelrohr 6 bei seiner Verschiebung einwandfrei.

Auch die Prismenform der Führungselemente 15, 15' trägt zur sicheren Schiebeführung des Mantelrohres 6 im Führungsrohr 13 bei.

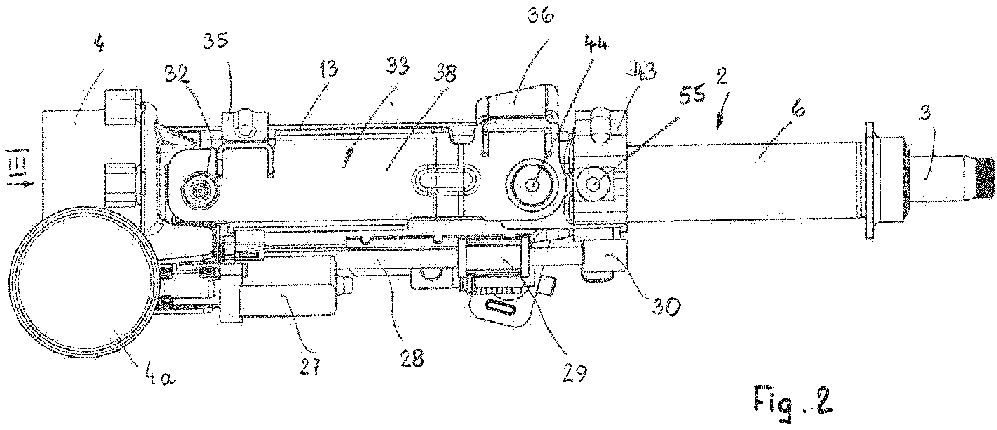

Um das Mantelrohr 6 in seiner Längsrichtung verschieben zu können, ist ein Längenverstellantrieb 27 vorgesehen (Fig. 2), der eine Gewindespindel 28 aufweist, die parallel zur Zahnwelle 5 bzw. zum Mantelrohr 6 verläuft. Auf der Gewindespindel 28 sitzt eine Antriebsmutter 29, die je nach Drehrichtung der Gewindespindel 28 längs der Gewindespindel 28 bewegt wird.

Die Antriebsmutter 29 ist fest mit dem Mantelrohr 6 verbunden, das je nach Bewegungsrichtung der Antriebsmutter 29 auf der Gewindespindel 28 in die jeweilige Richtung relativ zum Führungsrohr 13 verschoben wird. Die Antriebsmutter 29 hat einen (nicht dargestellten) Verbindungsteil, der durch den axial verlaufenden Schlitz 25 des Führungsrohres 13 ragt und am Mantelrohr 6 befestigt ist.

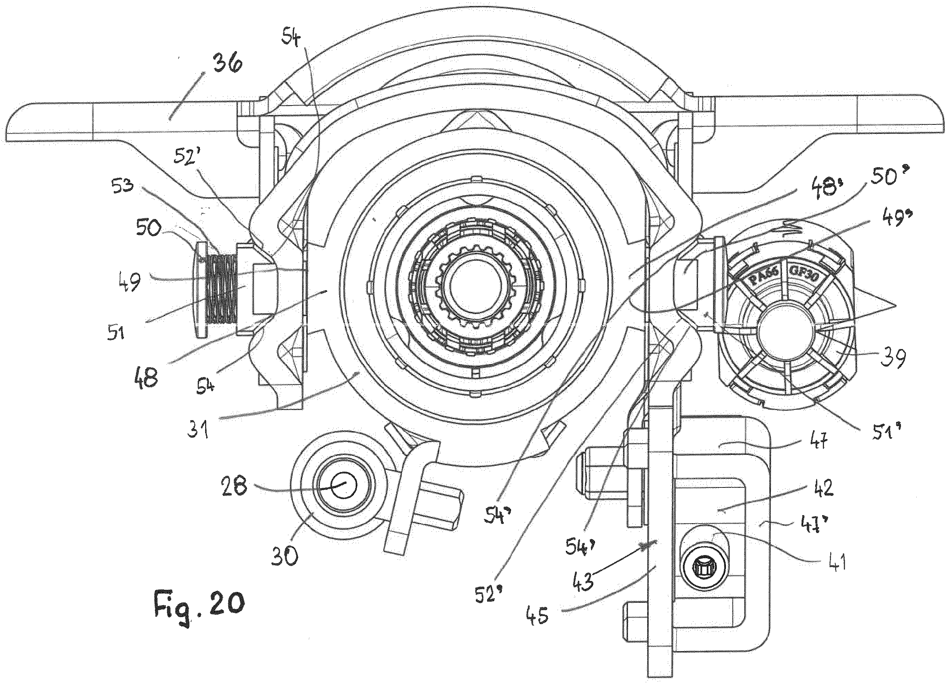

Das freie Ende der Gewindespindel 28 ist in einem Lager 30 drehbar gelagert, das an einem Hubring 31 befestigt ist (Fig. 2 und 20), der das Mantelrohr 6 umgibt und am freien Ende des Führungsrohes 13 befestigt ist.

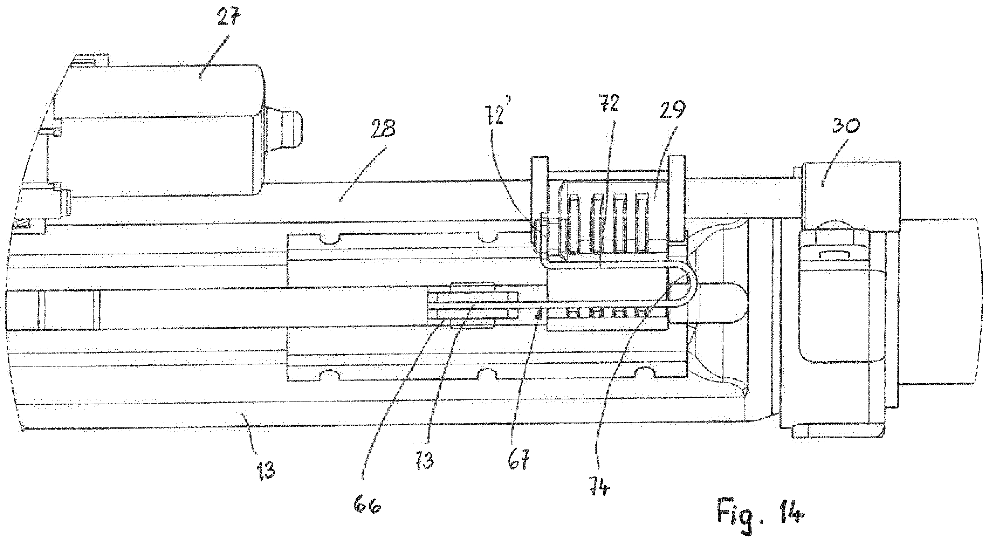

Die Gewindespindel 28 verläuft im Bereich neben dem Führungsrohr 13 (Fig. 2 und 14).

In der beschriebenen Weise wird mit nur einem einzigen Längenverstellantrieb 27 die Längsverstellung des Mantelrohres 6 und damit des Lenkelementes 1 erreicht, was sich kostengünstig auf die Herstellung der Verstelleinrichtung auswirkt. Zudem trägt diese Maßnahme dazu bei, die Verstelleinrichtung kompakt zu halten, ohne die Funktionsfähigkeit der Verstelleinrichtung zu beeinträchtigen.

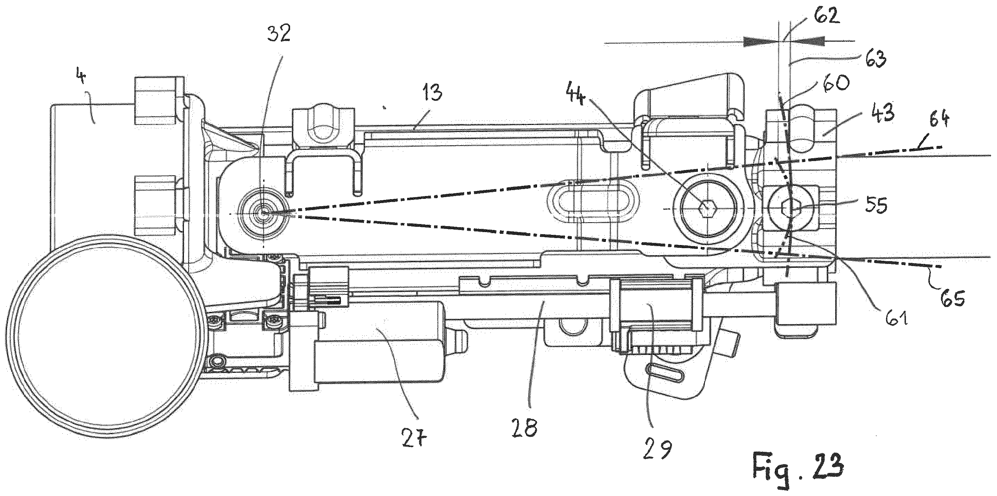

Der Lenkstrang 2 kann außerdem um eine senkrecht zum Führungsrohr 13 liegende Achse 32 (Fig. 23) geschwenkt werden, um den Lenkstrang 2 und damit das Lenkelement 1 auch in Höhenrichtung zu verstellen. In Fig. 23 ist durch strichpunktierte Linien 64, 65 der Schwenkbereich des Lenkstranges in Höhenrichtung angegeben.

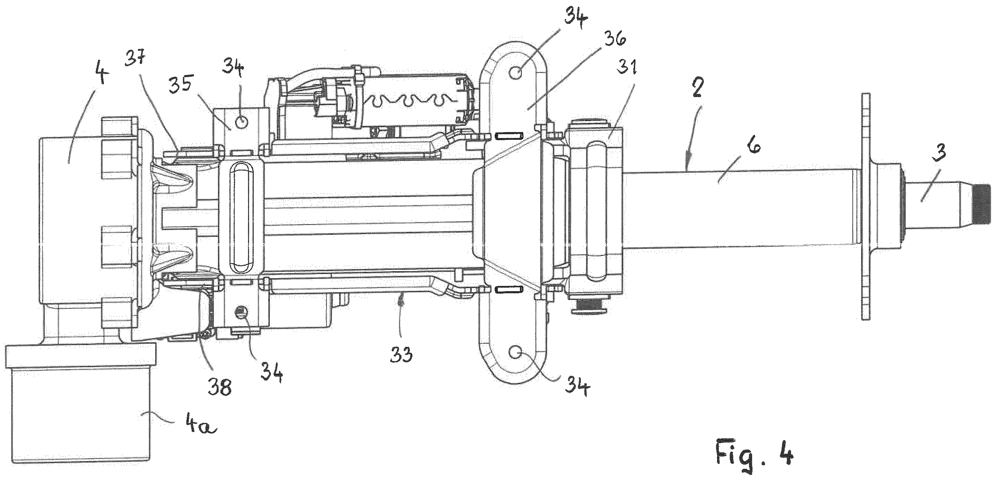

Zur Bildung der Schwenkachse 32 ist der Lenkstrang 2 an einer Halterung, die vorzugsweise als Lagerbock 33 (Fig. 2) ausgebildet ist, schwenkbar gelagert, der am Fahrzeug in geeigneter Weise befestigt wird. Wie Fig. 4 zeigt, sind am Lagerbock 33 Befestigungspunkte 34 vorgesehen, über welche die Anbindung des Lagerbockes 33 an das Fahrzeug erfolgt. Im Ausführungsbeispiel sind die Befestigungspunkte 34 Durchtrittsöffnungen für Schrauben, mit denen der Lagerbock 33 im Fahrzeug befestigt wird. Die Befestigungspunkte 34 sind an quer zur Längsachse des Lenkstranges 2 sich erstreckenden Querträgern 35, 36 vorgesehen, die quer zur Achse des Lenkstranges 2 über das Führungsrohr 13 so vorstehen, dass die Befestigungspunkte 34 seitlich neben dem Lenkstrang 2 liegen. Dadurch ist eine einfache Befestigung des Lagerbockes 33 und damit des Lenkstranges 2 im Fahrzeug möglich.

Die Querträger 35, 36 sind mit zwei Seitenträgern 37, 38 des Lagerbockes 33 fest verbunden (Fig. 4). Die Seitenträger 37, 38 sind vorteilhaft dünne Seitenwände, zwischen denen sich der Lenkstrang 2 erstreckt.

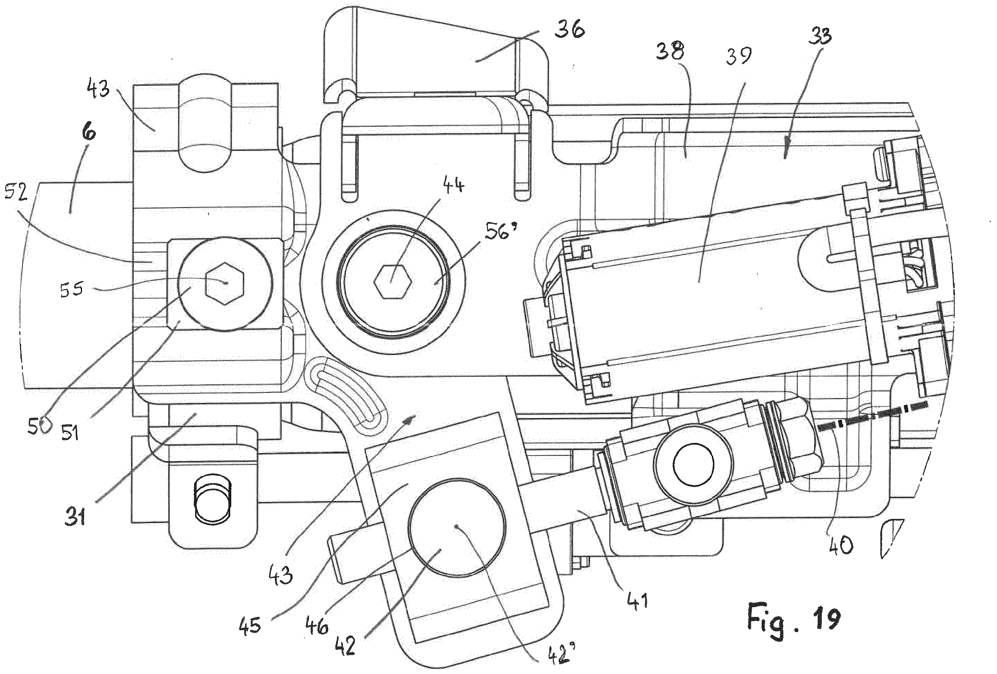

Zur Höhenverstellung des Lenkstranges 2 ist ein Höhenverstell-Antrieb 39 vorgesehen (Fig. 19), der am Lagerbock 33, insbesondere an dessen Seitenträger 38, angeordnet ist. Er treibt über eine nur schematisch dargestellte biegsame Welle 40 eine Gewindespindel 41 drehbar an. Auf ihr sitzt eine Antriebsmutter 42, die je nach Drehrichtung der Gewindespindel 41 bewegt wird.

Auf der Antriebsmutter 42 ist ein Verstellhebel 43 schwenkbar gelagert. Bei der Höhenverstellung des Lenkstranges 2 schwenkt der Verstellhebel 43 um eine Achse 44, die sich senkrecht zur Achse des Mantelrohres 6 bzw. des Führungsrohres 13 erstreckt. Der Verstellhebel 43 hat einen Hebelarm 45, der auf der Antriebsmutter 42 sitzt.

Die Antriebsmutter 42 hat beispielhaft kreisförmigen Umriss. Der Hebelarm 45 ist mit einer entsprechenden kreisförmigen Durchtrittsöffnung 46 versehen, durch welche die Antriebsmutter 42 ragt und deren Rand mit allenfalls geringem Spiel an der Antriebsmutter 42 anliegt.

Wird die Antriebsmutter 42 durch Drehen der Gewindespindel 41 in deren Achsrichtung verschoben, kann somit der Verstellhebel 43 bzw. sein Hebelarm 45 um die Achse 42' der Antriebsmutter 42 drehen. Dabei wird der Verstellhebel 43 um die Achse 44 gedreht.

Wie aus Fig. 20 hervorgeht, hat der Hebelarm 45 auf seiner Außenseite ein U-förmiges Halteteil 47, das mit seinen beiden Schenkeln auf dem Hebelarm befestigt ist und dessen Steg 47' die Durchtrittsöffnung 47 für die Antriebsmutter 42 aufweist. Das U-förmige Halteteil 47 überdeckt die Antriebsmutter 42, wodurch diese gegen Beschädigung geschützt wird.

Der Hebelarm 45 ist ein Ansatz des Verstellhebels 43, welcher den Hubring 31 über einen Teil seines Umfanges mit Abstand umgibt.

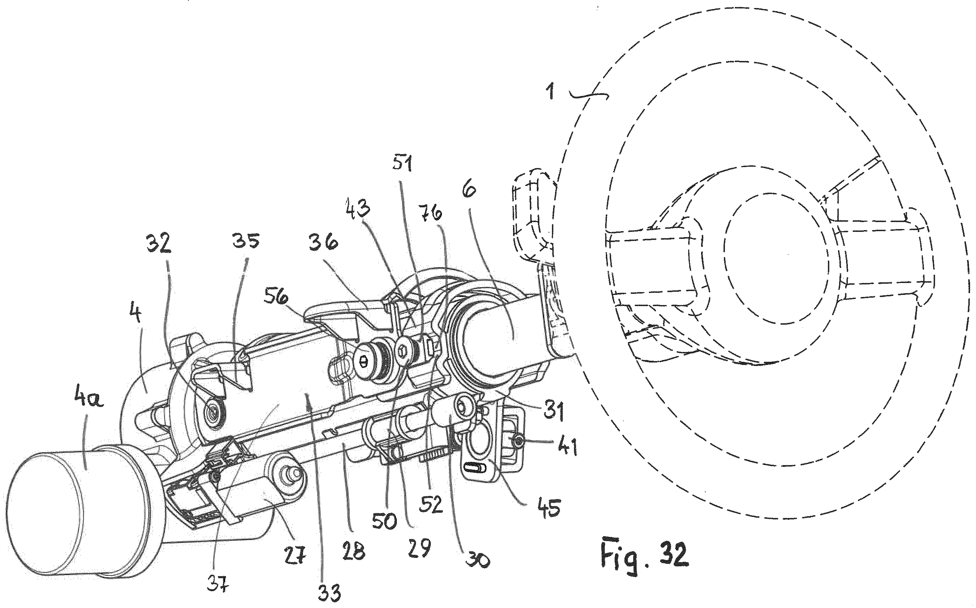

Der Hubring 31 weist diametral einander gegenüberliegende Verdickungen 48, 48' auf, die vorteilhaft ebene und parallel zueinander liegende Stirnseiten 49, 49' aufweisen. Auf ihnen ist jeweils ein nach außen vorstehender Achsbolzen 50, 50' befestigt, der durch schlitzförmige Öffnungen 76 (Fig. 32) des Verstellhebels 43 nach außen vorsteht. Auf den Achsbolzen 50, 50' sitzt jeweils frei drehbar ein Gleitstück 51, 51', das jeweils mit einer in Achsrichtung des Verstellhebels 43 verlaufenden Gleitführung 52, 52' zusammenwirkt.

Die Gleitführungen 52, 52' werden durch entsprechend verformte Abschnitte des Verstellhebels 43 gebildet. Sie sind als Vertiefungen ausgebildet, in welche die Gleitstücke 51, 51' von außen ragen.

Auf dem Achsbolzen 50 sitzt wenigstens eine Druckfeder 53, die das Gleitstück 51 gegen den Boden der Gleitführung 52 drückt und die sich am Kopf des Achsbolzens 50 abstützt. Da die diametral gegenüberliegende Gleitführung 52' Bestandteil des Hubringes 31 ist, wird auch das gegenüberliegende Gleitstück 51' durch die Kraft der Druckfeder 53 gegen die Gleitführung 52' gedrückt.

Die Gleitführungen 52, 52' haben nach außen divergierende Seitenwände 54, 54', an denen die Gleitstücke 51, 51' mit konturangepassten Abschnitten anliegen.

Die Druckfeder 53 bildet ein Ausgleichselement, das eventuelles Spiel zwischen dem Verstellhebel 43 und den Gleitstücken 51, 51' zuverlässig herausnimmt.

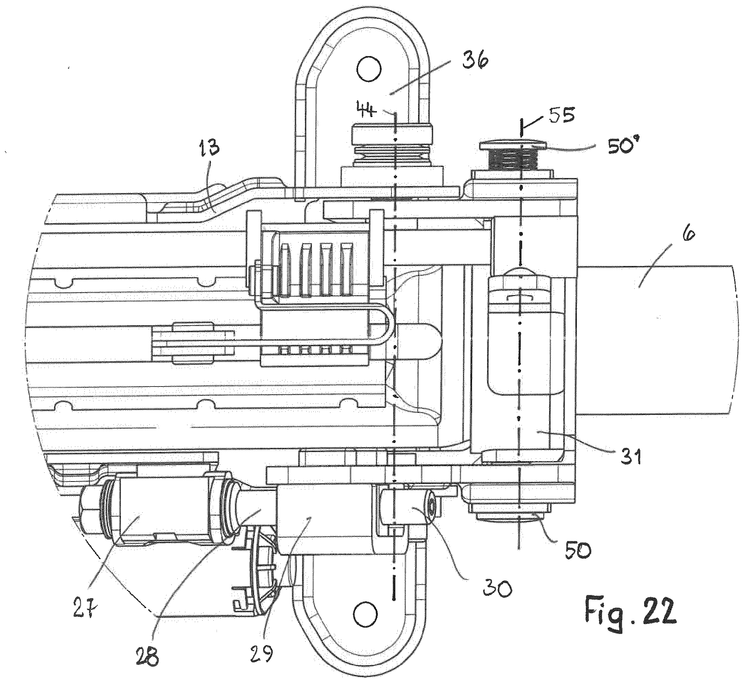

Bei der Höhenverstellung des Lenkstranges 2 schwenkt nicht nur der Verstellhebel 43 um die Achse 44, sondern auch um eine Achse 55, die durch die Achse der beiden einander gegenüberliegenden Achsbolzen 50, 50' gebildet wird (Fig. 22).

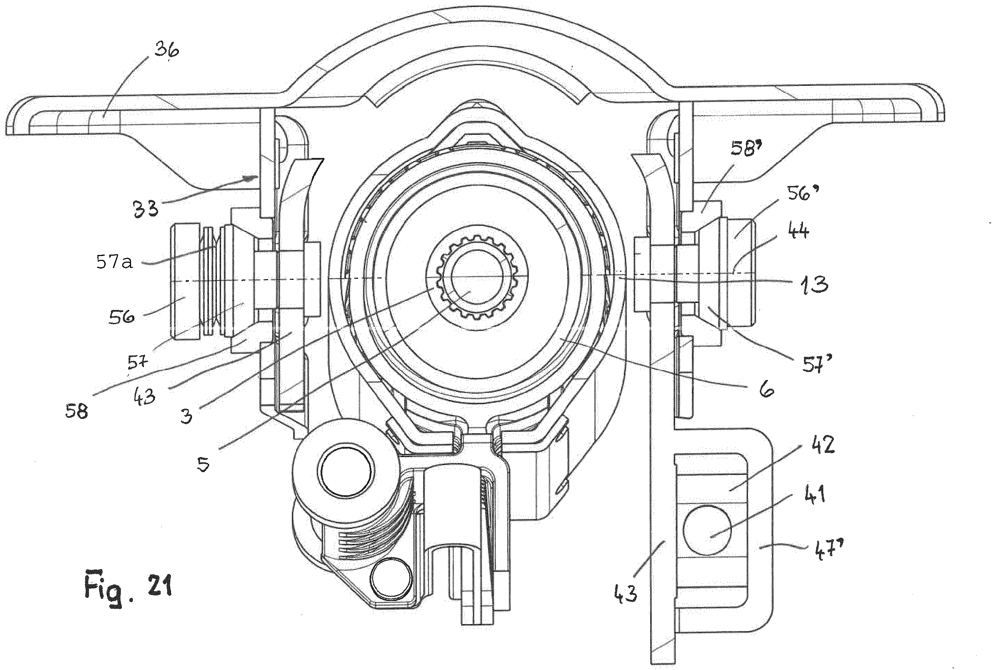

Die Schwenk/Drehausbildung des Verstellhebels 43 wird anhand der Fig. 21 und 22 näher erläutert.

Die Drehachse 44 wird durch zwei Achsbolzen 56, 56' definiert, die unter Zwischenlage jeweils eines Lagers 57, 57' mit dem Verstellhebel 43 verbunden sind. Das Lager 57 steht unter der Kraft wenigstens einer Druckfeder 57a, die als Ausgleichselement dient und eventuell auftretendes Spiel zwischen dem Verstellhebel 43 und dem Lagerbock 33 herausdrückt. Die Druckfeder 57a stützt sich am Kopf des Achsbolzens 56 ab und sorgt dafür, dass im Bereich beider Achsbolzen 56, 56' kein Spiel auftritt. Dadurch ist gewährleistet, dass der Verstellhebel 43 bei der Höhenverstellung des Lenkstranges 2 einwandfrei geschwenkt werden kann.

Die Lager 57, 57' stützen sich an Gegenlagern 58, 58' des Lagerbockes 33 ab.

Gemäß Fig. 22 liegen die Dreh/Schwenkachsen 44 und 55 des Verstellhebels 43 parallel zueinander sowie senkrecht zur Achse des Mantelrohres 6 bzw. des Führungsrohres 13. Die Achse 55 liegt hierbei mit geringerem Abstand zum freien Ende des Führungsrohres 13 als die Achse 44.

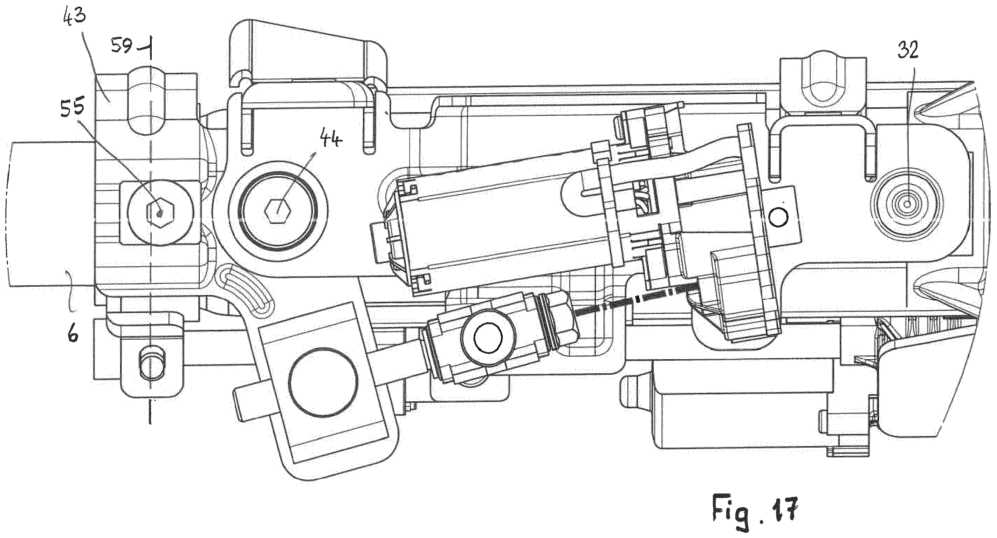

Die Fig. 17 bis 19 zeigen unterschiedliche Positionen des Verstellhebels 43 relativ zum Hubring 31 bei der Höhenverstellung des Lenkstranges 2.

Fig. 17 zeigt eine Position, bei der das Lenkelement 1 sich in einer mittigen Stellung befindet. Der Verstellhebel 43 ist so angeordnet, dass seine axiale Symmetrieebene 59 senkrecht zum Mantelrohr 6 liegt. Dies hat zur Folge, dass die Achsen des Mantelrohres 6 und des Verstellhebels 43 parallel zueinander verlaufen, in Richtung der Drehachse 55 des Verstellhebels 43 gesehen (Fig. 17).

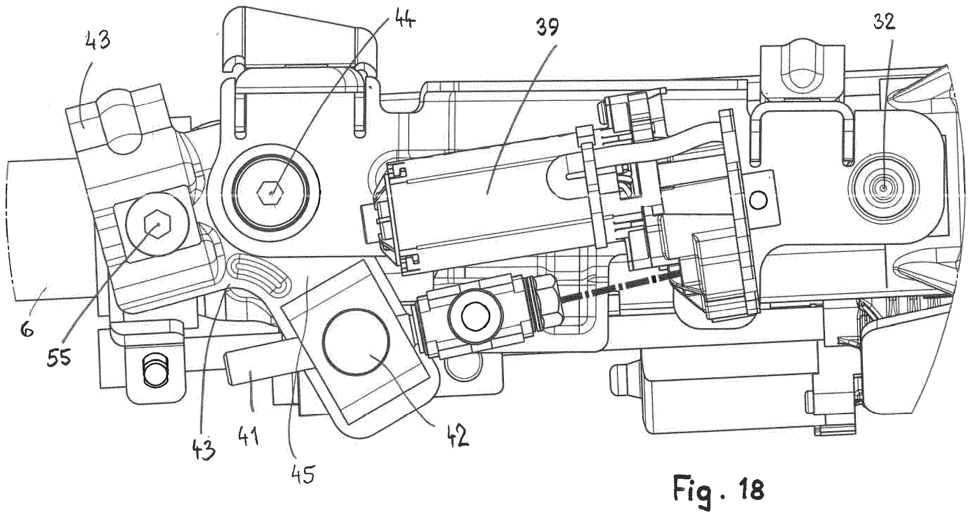

Um das Lenkelement 1 in eine untere Position zu verstellen, wird mit dem Antrieb 39 die Gewindespindel 41 so gedreht, dass die Antriebsmutter 42 in Fig. 18 nach rechts bewegt wird. Dies hat zur Folge, dass der Verstellhebel 43 über den Hebelarm 45 entgegen dem Uhrzeigersinn um die Achse 44 und gegenüber dem Hubring 31 um die Achse 55 geschwenkt. Da der Hubring 31 und der Verstellhebel 43 mit dem Führungsrohr 13 verbunden sind, wird dieses zusammen mit dem Mantelrohr 6 in der Darstellung gemäß Fig. 17 schräg nach unten geschwenkt.

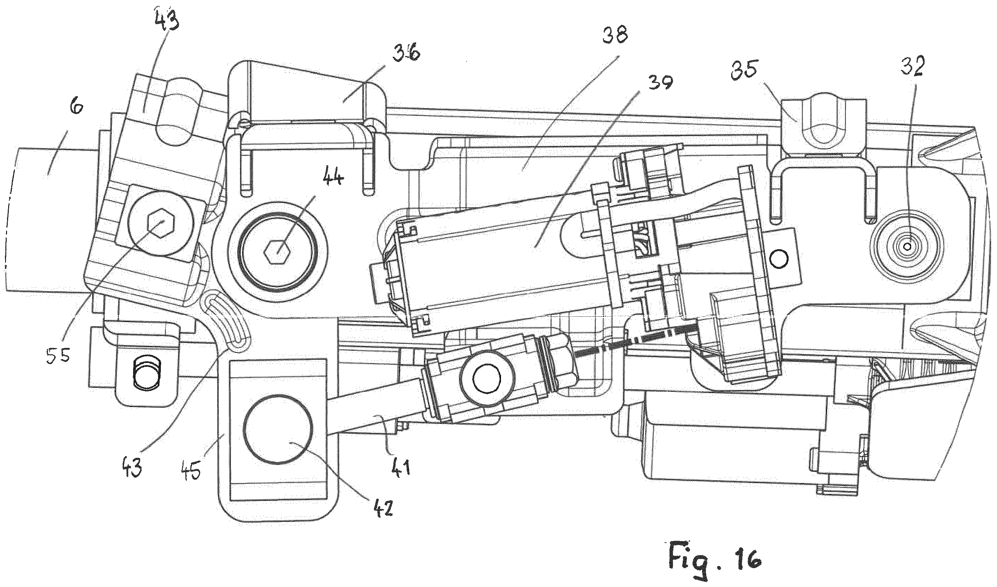

Fig. 16 zeigt die Position, wenn das Lenkelement 1 in seine obere Position verstellt worden ist. In diesem Falle wird die Gewindespindel 41 so gedreht, dass die Antriebsmutter 42, ausgehend von der Mittelposition gemäß Fig. 17, in Fig. 16 nach links verschoben wird. Über den Hebelarm 45 wird dadurch der Verstellhebel 43 im Uhrzeigersinn um die Achse 44 geschwenkt. Außerdem wird er gegenüber dem Hubring 31 um die Achse 55 ebenfalls im Uhrzeigersinn schwenkt. Dadurch wird der Lenkstrang 2 um die Achse 32 (Fig. 16) aufwärts geschwenkt.

Beim Verschwenken des Verstellhebels 43 gegenüber dem Hubring 31 um die Achse 55 gleiten die Gleitstücke 51, 51' in den Gleitführungen 52, 52' des Verstellhebels 43, so dass keine Klemmung zwischen dem Hubring 31 und dem Verstellhebel 43 auftritt. Da die Gleitstücke 51, 51' frei drehbar auf den Achsbolzen 50, 50' sitzen, können sie in jeder Schwenklage des Verstellhebels 43 verschoben werden.

Die Fig. 16 und 18 zeigen die beiden maximalen Stellungen des Lenkstranges 2 bei der Höhenverstellung. Zwischen diesen beiden Endstellungen kann der Lenkstrang 2 in jede gewünschte Stellung durch entsprechendes Drehen der Gewindespindel 41 verstellt werden.

Die beiden Dreh/Schwenkachsen 44, 55 sind nahe dem freien Ende des Führungsrohres 13 vorgesehen und haben verhältnismäßig kleinen Abstand voneinander. Die Schwenkachse 32 des Lenkstranges 2 hingegen befindet sich nahe benachbart zum Aktuator 4 am anderen Ende des Führungsrohres 13.

Wie aus Fig. 23 hervorgeht, wirkt bei der Höhenverstellung des Lenkstranges 1 beim Schwenken um die Achse 32 ein verhältnismäßig großer Hebelarm. Der Schwenkradius durch die Achse 55 wird durch die strichpunktierte Linie 60 angegeben. Der durch die Schwenkachse 55 gehende Radius beim Schwenken um die Achse 44 des Verstellhebels 43 ist mit der strichpunktierten Linie 61 angegeben. Beim Verschwenken des Lenkstranges für die Höhenverstellung erfolgt der axiale Ausgleich durch die unterschiedlichen Radien im Verstellhebel 43 in der Achse 55. Dadurch können die hohen Belastungen bei der Höhenverstellung trotz der großen Hebellängen bewältigt werden. Der axiale Ausgleich ist durch das Maß 62 gekennzeichnet. Die Radien 60, 61 und damit die Lage der Achsen 32, 44 sind so vorgesehen, dass die Radien 60 und 61 in der Schwenkachse 55 einander berühren. Die durch den Berührpunkt verlaufende Ebene 63 bestimmt die eine Grenze und der Schnittpunkt des Radius 61 mit den den Verstellwinkel definierenden Geraden 64, 65 die andere Grenze des axialen Ausgleichsweges 62. Bezüglich der Definition des axialen Ausgleichs 62 wird ausdrücklich auf Fig. 23 verwiesen, aus der sich die Festlegung des axialen Ausgleichs ergibt.

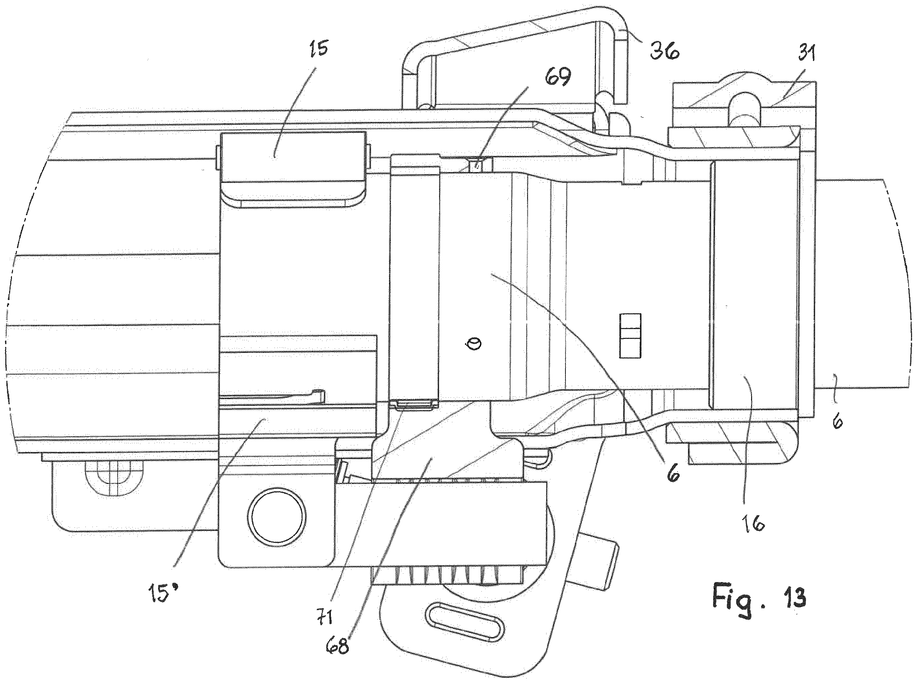

Die Verstelleinrichtung ist zusätzlich mit einer Crashfunktion ausgestattet. Am Mantelrohr 6 ist nahe dem im Führungsrohr 13 liegenden Ende eine Halterung 66 vorgesehen, die durch den axialen Schlitz 25 des Führungsrohres 13 nach außen ragt (Fig. 8). An der Halterung 66 ist ein Crashabsorber 67 befestigt, der außerdem mit einem innerhalb des Führungsrohres 13 untergebrachten ringförmigen Halter 68 verbunden ist. Er umgibt das Mantelrohr 6 und ist an der Innenwand des Führungsrohres 13 angeordnet. Am Umfang ist der Halter 68 mit wenigstens einem Scherstift 69 versehen. Wie Fig. 13 zeigt, ragen die Scherstifte 69 radial nach innen über den ringförmigen Halter 68 in Öffnungen im Mantelrohr 6.

Der Halter 68 hat vorteilhaft eine umfangsseitige Verrippung 70 und ist vorteilhaft mittels eines ihn umgebenden Toleranzringes 71 gehalten, der das Mantelrohr 6 umgibt.

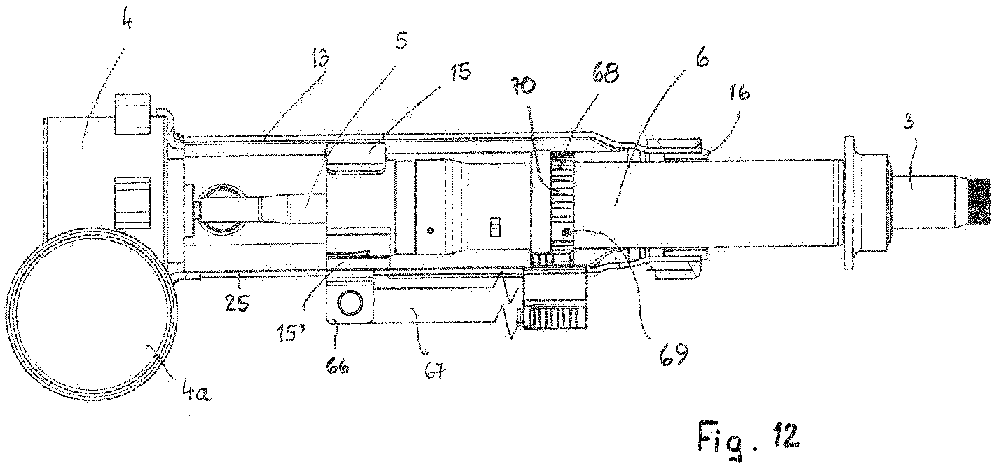

Fig. 12 zeigt die Situation nach einem Crash. Durch ihn wird das Mantelrohr 6 mit der Lenkspindel 3 in das Führungsrohr 13 verschoben. Die beim Crash auftretende Kraft ist so groß, dass der Scherstift 69 durch das Mantelrohr 6 abgeschert wird. Der Crashabsorber 67 wird durch den Crash verformt und nimmt dadurch einen großen Teil der beim Crashen auftretenden Kräfte auf.

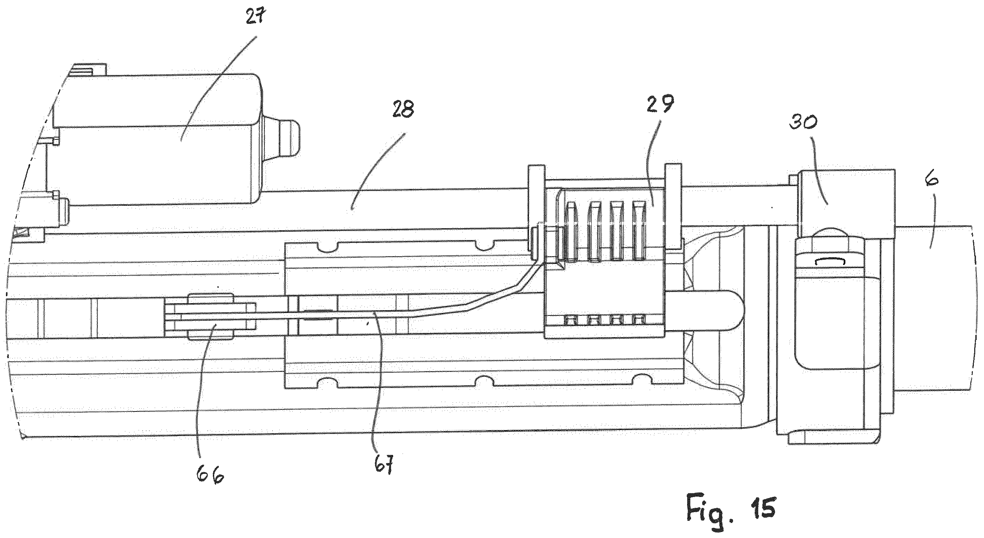

Die Fig. 14 und 15 zeigen den Crashabsorber 67 und dessen Befestigung am Lenkstrang im Detail. Der Crashabsorber 67 hat im Wesentlichen U-Form, dessen einer Schenkel 72 mit einer Abwinkelung 72' an der Antriebsmutter 29 befestigt ist. Der andere Schenkel 73 des Crashabsorber 67 ist mit der Halterung 66 fest verbunden.

Die beiden Schenkel 72, 73 liegen mit Abstand voneinander und gehen über ein 180°-Bogenstück 74 ineinander über.

Im Falle eines Crashs wird die Halterung 66 durch das verschobene Mantelrohr 6 mitgenommen, während die Antriebsmutter 29 ihre Position beibehält (Fig. 15). Dadurch wird der U-förmige Crashabsorber 67 plastisch so verformt, dass er eine langgestreckte Form annimmt.

Der Crashabsorber 67 wird vorteilhaft durch einen Blechstreifen gebildet, der einfach herzustellen, zu montieren und im Crashfall einfach zu verformen ist.

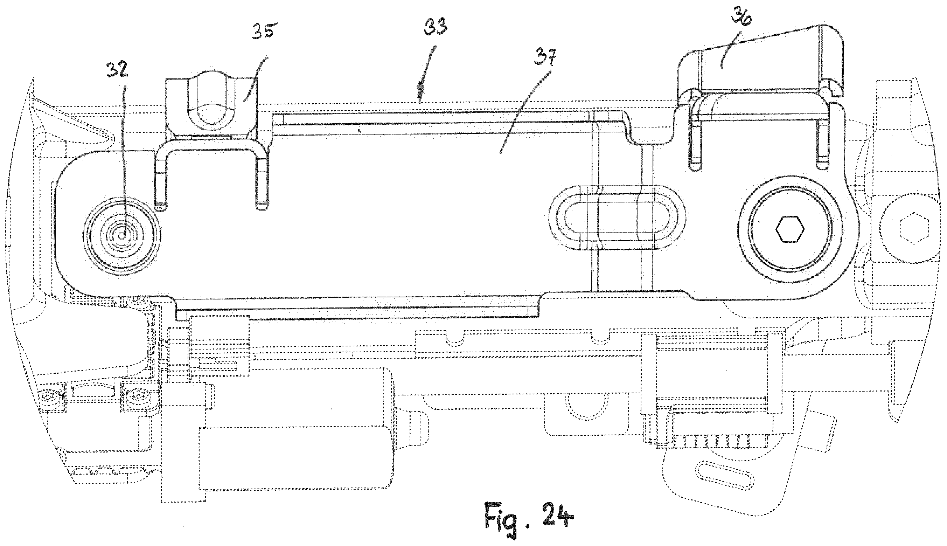

Fig. 24 zeigt den Lagerbock 33 mit den beiden Querträgern 35, 36 sowie dem einen Seitenträger 37. An den beiden Seitenträgern 37, 38 ist der Lenkstrang um die Achse 32 schwenkbar gelagert. Mittels der beiden brückenartigen Querträger 35, 36 wird der Lagerbock 33 fahrzeugseitig befestigt. Da beide Querträger 35, 36 fest mit den Seitenträgern 37, 38 verbunden sind, ist der Lagerbock 33 auf die jeweilige Einbausituation hin ausgebildet.

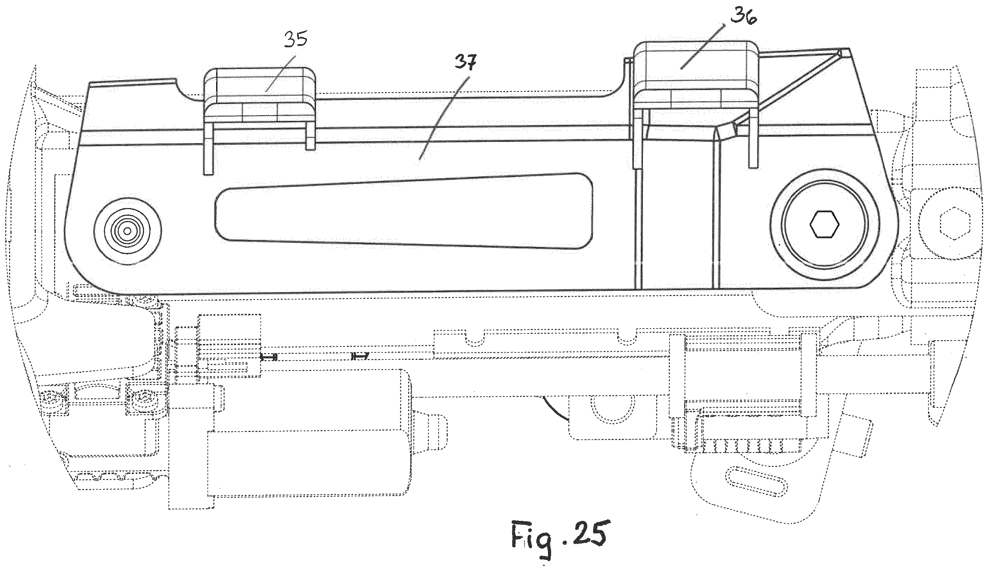

Bei der Ausführungsform gemäß Fig. 25 besteht die Möglichkeit, die beiden brückenartigen Querträger 35, 36 an die Einbausituation anzupassen, indem sich die Querträger 35, 36 längs der Seitenträger 37, 38 verschieben bzw. in unterschiedlichen Positionen an den Seitenträgern 37, 38 befestigen lassen. Der obere Rand der Seitenträger 37, 38 verläuft gerade, so dass sich die Querträger 35, 36 einfach in jeder erforderlichen Lage anbringen lassen.

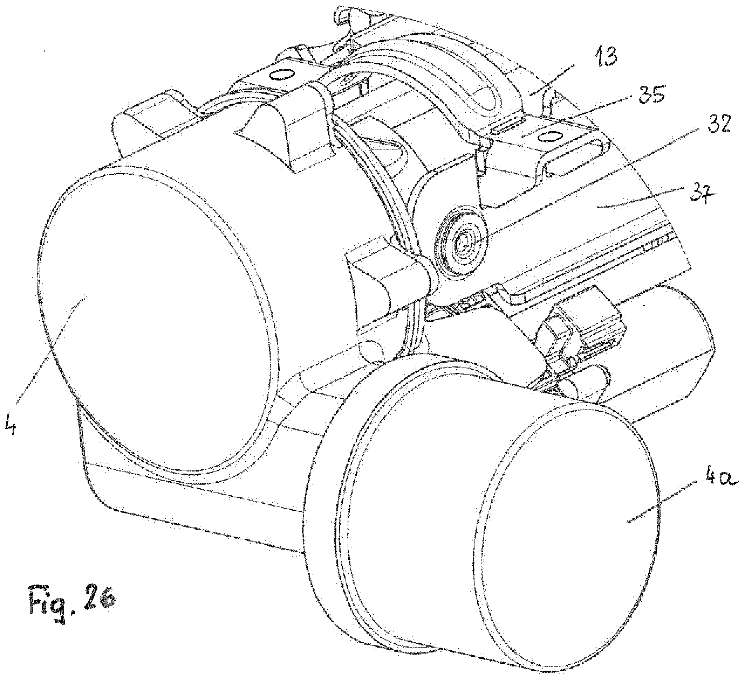

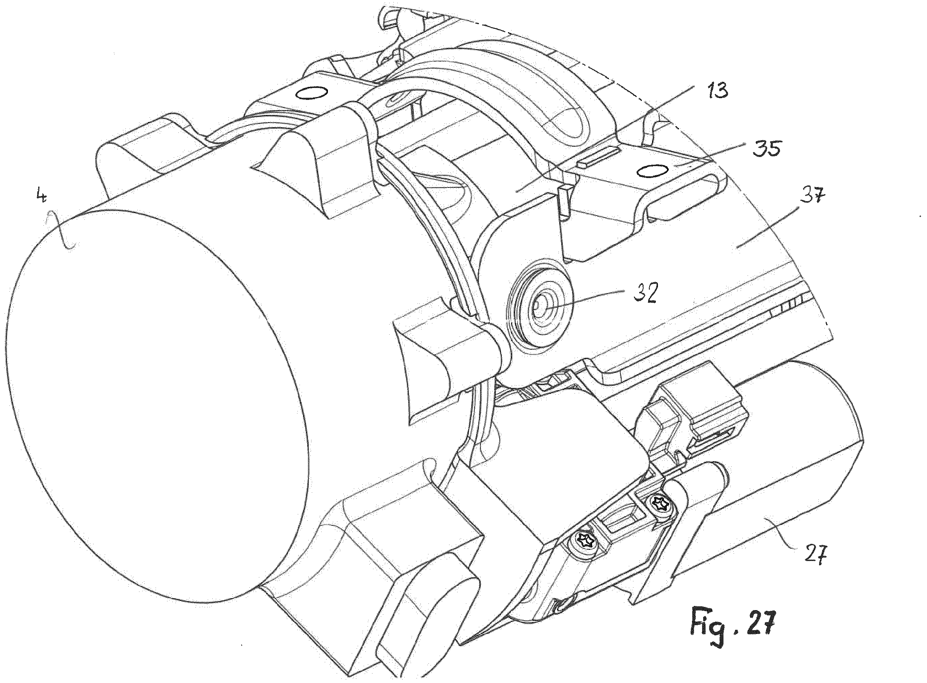

Die Fig. 26 und 27 zeigen den Aktuator 4, der fest mit dem Führungsrohr 13 verbunden ist. Daher bleibt der Aktuator 4 in seiner Position, auch wenn das Mantelrohr 6 verschoben wird.

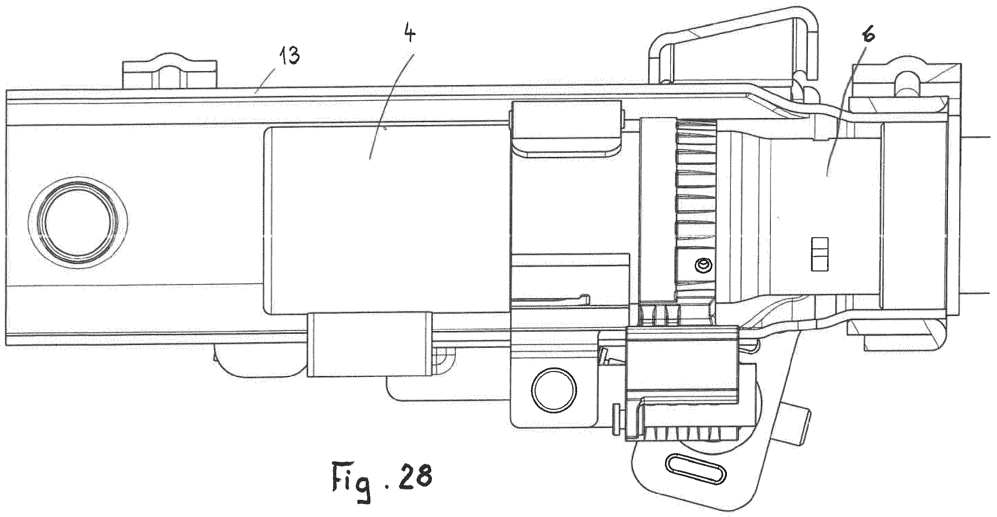

Bei der Ausführungsform gemäß Fig. 28 ist der Aktuator 4 an dem innerhalb des Führungsrohres 13 liegenden Ende des Mantelrohres 6 befestigt. Dadurch wird der Aktuator 4 beim Verschieben des Mantelrohres 6 axial mitgeführt.

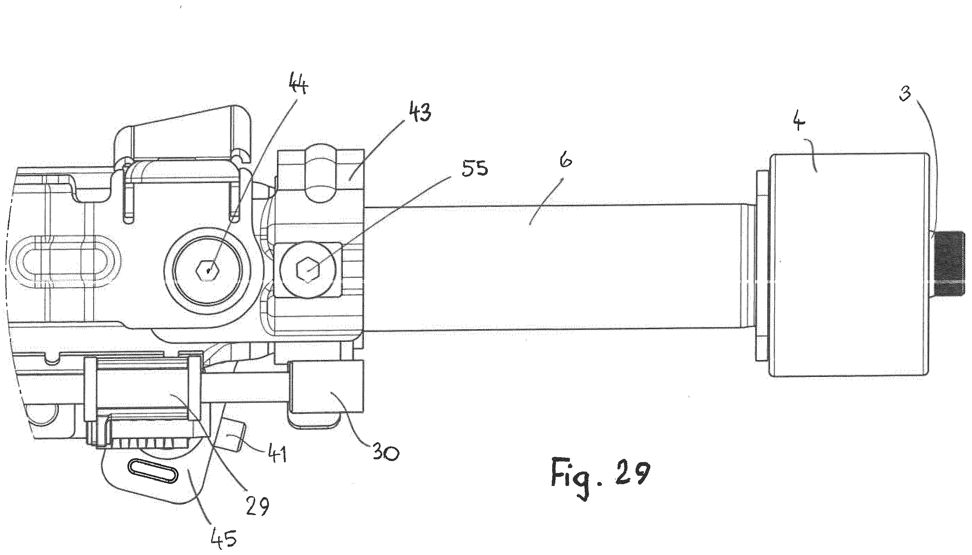

Fig. 29 zeigt die Möglichkeit, den Aktuator 4 möglichst nahe am Lenkelement 1 anzuordnen. In diesem Falle sitzt der Aktuator 4 vorteilhaft auf der Lenkspindel 3. Auch bei einer solchen Ausbildung wird der Aktuator 4 axial mitgeführt, wenn das Mantelrohr 6 in der beschriebenen Weise verschoben wird.

Fig. 30 zeigt die Möglichkeit, an der Lenkspindel 3 wenigstens einen Sensor 75 anzuordnen. Der Sensor 75 kann beispielsweise ein Winkelsensor sein, mit dem die Winkelposition der Lenkspindel 3 erfasst wird.

Grundsätzlich ist es möglich, den Sensor 75 auch in den Aktuator zu integrieren.

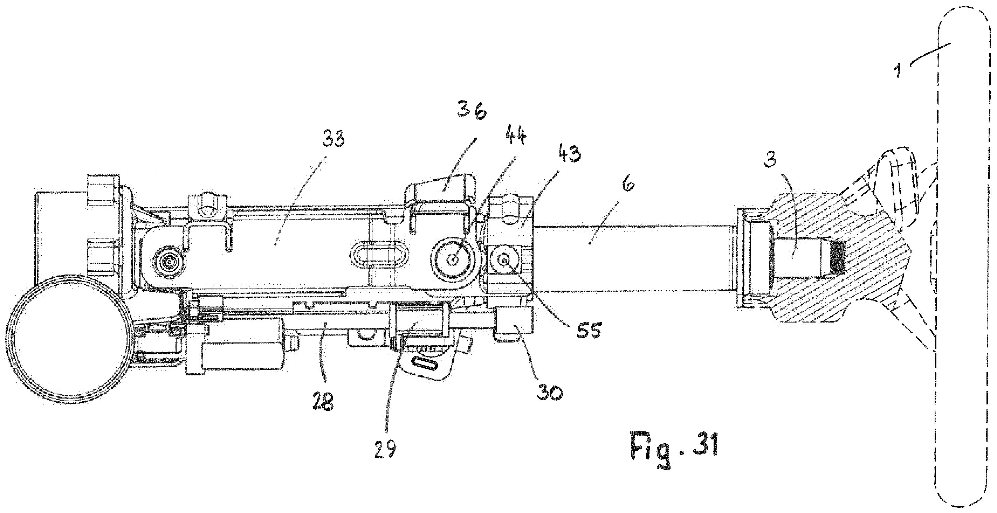

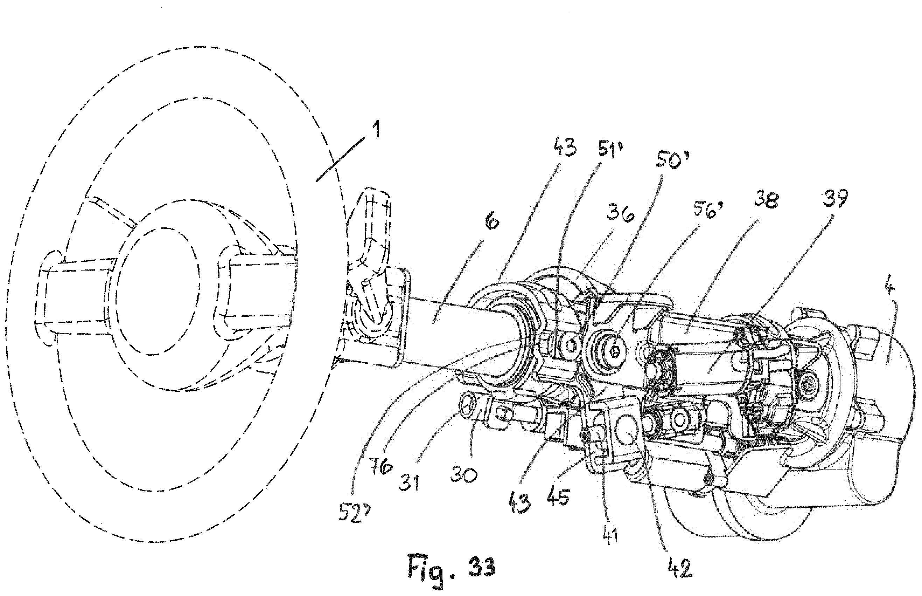

Die Fig. 31 bis 33 zeigen die Verstelleinrichtung in einer Position, in welcher das Lenkelement 1 die Fahrposition einnimmt. Es ist im Beispielsfall ein Lenkrad, das in bekannter Weise auf der Lenkspindel 3 befestigt ist.

In dieser Position ist das Mantelrohr 6 aus dem Führungsrohr 13 so weit herausgezogen, dass sich das Lenkelement in der für den Fahrer optimalen Position befindet.

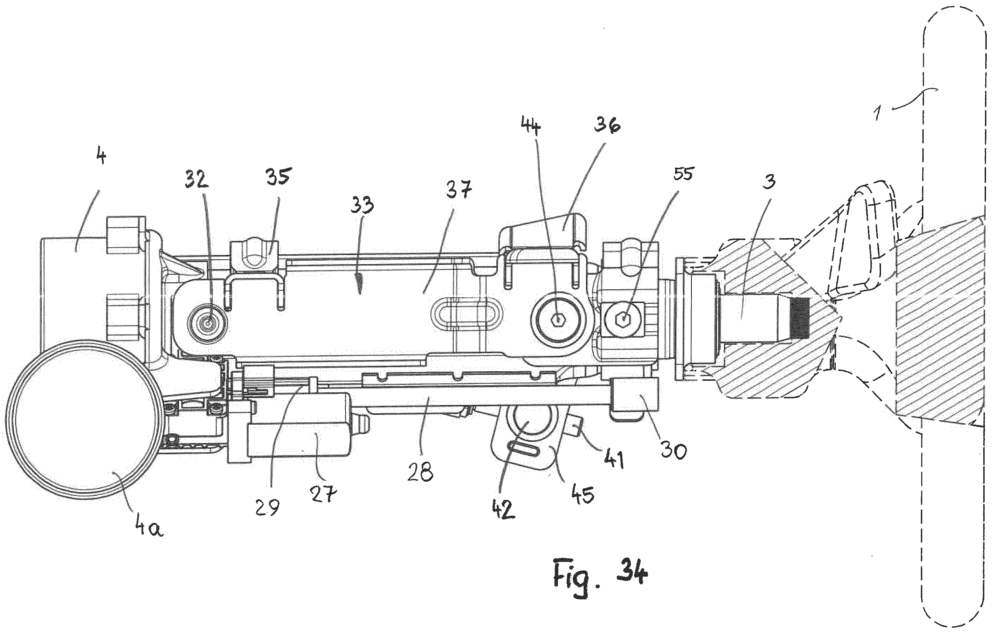

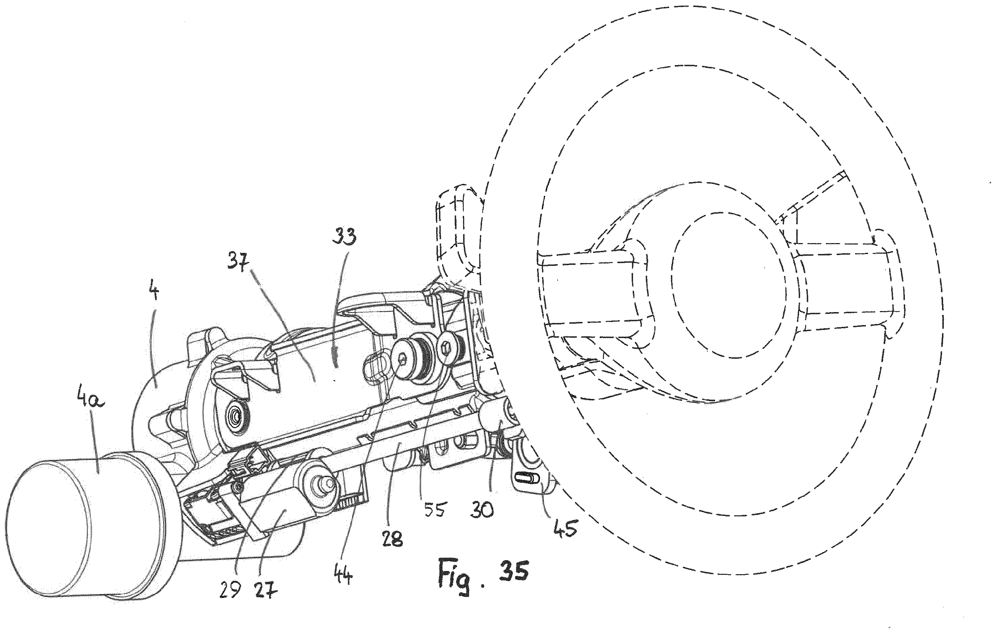

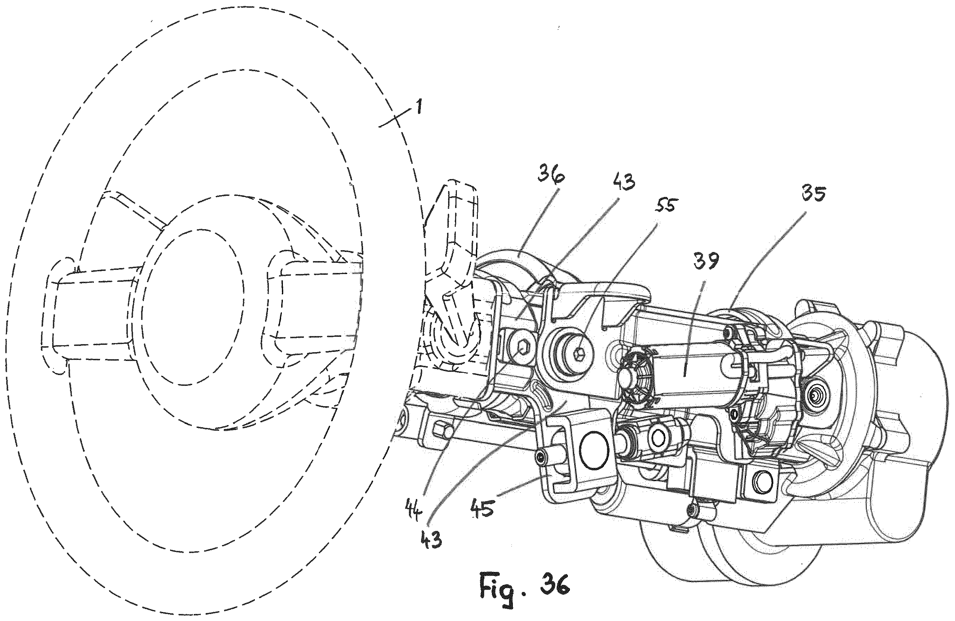

Die Fig. 34 bis 36 zeigen die Verstelleinrichtung in einer Lage, in der das Lenkelement 1 seine Verstauposition einnimmt. In dieser Position ist das Mantelrohr 6 maximal in das Führungsrohr 13 eingeschoben, so dass der Fahrer bequem ohne Behinderung durch das Lenkelement aus dem Fahrzeug aussteigen kann.

## Patentansprüche

1. Verstelleinrichtung für Lenksäulen von Fahrzeugen, mit einem längenveränderlichen Lenkstrang (2), an den ein Lenkelement (1) anschließbar ist, und mit wenigstens einer Antriebseinheit (27) zur Längenverstellung des Lenkstranges (2), der ein Führungsrohr (13) aufweist, das einen axial verlaufenden Schlitz (25) aufweist, durch den ein fest mit dem Innenrohr (6) verbundener Mitnehmer ragt, der mit der Antriebseinheit (27) antriebsverbunden ist, und das mit einer Halterung (33) unverschieblich verbunden ist und in das ein axial verschiebbares Innenrohr (6) ragt, das mit dem Lenkelement (1) verbindbar ist und das mit der Antriebseinheit (27) antriebsverbunden ist, die ein Gewindespindel-Antrieb ist, auf dessen Gewindespindel (28) eine Antriebsmutter (29) sitzt, die fest mit dem Mitnehmer verbunden ist, **dadurch gekennzeichnet, dass** das freie Ende der Gewindespindel (28) in einem Lager (30) drehbar gelagert ist, das an einem Hubring (31) befestigt ist, der das Innenrohr (6) umgibt und am freien Ende des Führungsrohres (13) befestigt ist.

2. Verstelleinrichtung nach Anspruch 1,
**dadurch gekennzeichnet, dass** der Lenkstrang (2) um eine Schwenkachse (32) schwenkbar mit der Halterung (33) verbunden ist, und dass das Führungsrohr (13) mit Abstand von der Schwenkachse (32) mit dem Hubring (31) verbunden ist, an dem ein Verstellelement (43) um eine weitere Achse (55) schwenkbar gelagert ist, die parallel zur Schwenkachse (32) liegt.

3. Verstelleinrichtung nach Anspruch 2,
**dadurch gekennzeichnet, dass** das Verstellelement (43) mit einem Höhenverstell-Antrieb (39) antriebsverbunden ist.

4. Verstelleinrichtung nach Anspruch 2 oder 3,
**dadurch gekennzeichnet, dass** das Verstellelement (43) um eine Schwenkachse (44) schwenkbar an der Halterung (33) gelagert ist.

5. Verstelleinrichtung nach Anspruch 4,
**dadurch gekennzeichnet, dass** die Schwenkachse (44) des Verstellelementes (43) parallel zur weiteren Schwenkachse (55) liegt.

6. Verstelleinrichtung nach einem der Ansprüche 2 bis 5,
**dadurch gekennzeichnet, dass** das Verstellelement (43) einen quer zu seiner Schwenkachse (44) verlaufenden abstehenden Hebelarm (45) aufweist, an dem der Höhenverstell-Antrieb (39) angreift.

7. Verstelleinrichtung nach einem der Ansprüche 2 bis 6,
**dadurch gekennzeichnet, dass** das Verstellelement (43) den Hubring (31) teilweise umgibt.

8. Verstelleinrichtung nach einem der Ansprüche 2 bis 7,
**dadurch gekennzeichnet, dass** das Verstellelement (43) wenigstens eine Gleitführung (52, 52') aufweist, in die wenigstens ein dem Hub-ring (31) zugeordnetes Gleitstück (51, 51') eingreift.

9. Verstelleinrichtung nach Anspruch 8,
**dadurch gekennzeichnet, dass** die Gleitführung (52, 52') senkrecht zur Schwenkachse (44) des Verstellelementes (43) verläuft.

10. Verstelleinrichtung nach Anspruch 8 oder 9,
**dadurch gekennzeichnet, dass** das Verstellelement (43) diametral einander gegenüberliegende Gleitführungen (52, 52') aufweist, in die die Gleitstücke (51, 51') des Hubelementes (31) eingreifen.

11. Verstelleinrichtung nach einem der Ansprüche 2 bis 10,
**dadurch gekennzeichnet, dass** der Abstand zwischen der Schwenkachse (44) des Verstellelementes (43) und der weiteren Achse (55) des Hubringes (31) kleiner ist als der Abstand der Schwenkachse (32) des Lenkstranges (2) von der weiteren Achse (55) und/oder der Schwenkachse (44) des Verstellelementes (43).

12. Verstelleinrichtung nach einem der Ansprüche 8 bis 12,
**dadurch gekennzeichnet, dass** die Gleitführung (52, 52') und das Gleitstück (51, 51') einen Axialausgleich (62) beim Verschwenken des Lenkstranges (2) bei dessen Höhenverstellung ermöglichen.

13. Verstelleinrichtung nach einem der Ansprüche 2 bis 12,
**dadurch gekennzeichnet, dass** der Höhenverstell-Antrieb (39) ein Gewindespindel-Antrieb ist, auf dessen Gewindespindel (41) eine Antriebsmutter (42) sitzt, auf der das Verstellelement (43) schwenkbar gelagert ist.

## Claims

1. Adjustment device for steering columns of vehicles, having a length-adjustable steering train, (2), to which a steering element (1) can be connected, and having at least one drive unit (27) for adjusting the length of the steering train (2), which has a guide tube (13) having an axially extending slot (25) through which a driver, which is fixedly connected to the inner tube (6), projects, said driver being drive-connected to the drive unit (27), and which is fixedly connected to a bracket (33) and into which an axially slidable inner tube (6) protrudes, which can be connected to the steering element (1) and which is drive-connected to the drive unit (27), which is a threaded spindle drive, on whose threaded spindle (28) a drive nut (29) sits that is fixedly connected to the driver, **characterised in that** the free end of the threaded spindle (28) is rotatably mounted in a bearing (30), which is attached to a lifting ring (31), which surrounds the inner tube (6) and is attached to the free end of the guide tube (13).

2. Adjustment device according to Claim 1,
the steering train (2) is connected to the bracket (33) so as to be pivotable about a pivot axis (32), and that the guide tube (13) is connected, at a distance from the pivot axis (32), to the lifting ring (31), on which an adjustment element (43) is mounted so as to pivot about a further axis (55) which lies parallel to the pivot axis (32).

3. Adjustment device according to Claim 2, **characterised in that** the adjustment element (43) is drive-connected to a height-adjustment drive (39).

4. Adjustment device according to Claim 2 or 3, **characterised in that** the adjustment element (43) is mounted on the bracket (33) so as to be pivotable about a pivot axis (44).

5. Adjustment device according to Claim 4, **characterised in that** the pivot axis (44) of the adjustment element (43) lies parallel to the further pivot axis (55).

6. Adjustment device according to one of Claims 2 to 5, **characterised in that** the adjustment element (43) has a protruding lever arm (45) running transversely to its pivot axis (44), with which the height-adjustment drive (39) engages.

7. Adjustment device according to one of Claims 2 to 6, **characterised in that** the adjustment element (43) partially surrounds the lifting ring (31).

8. Adjustment device according to one of Claims 2 to 7, **characterised in that** the adjustment element (43) has at least one sliding guide (52, 52'), into which at least one slider (51, 51') associated with the lifting ring (31) engages.

9. Adjustment device according to Claim 8, **characterised in that** the sliding guide (52, 52') runs perpendicular to the pivot axis (44) of the adjustment element (43).

10. Adjustment device according to Claim 8 or 9, **characterised in that** the adjustment element (43) has diametrically opposed sliding guides (52, 52'), into which the sliders (51, 51') of the lifting element (31) engage.

11. Adjustment device according to one of Claims 2 to 10, **characterised in that** the distance between the pivot axis (44) of the adjustment element (43) and the further axis (55) of the lifting ring (31) is smaller than the distance between the pivot axis (32) of the steering train (2) and the further axis (55) and/or the pivot axis (44) of the adjustment element (43).

12. Adjustment device according to one of Claims 8 to 12, **characterised in that** the sliding guide (52, 52') and the slider (51, 51') enable axial compensation (62) when the steering train (2) is pivoted when its height is adjusted.

13. Adjustment device according to one of Claims 2 to 12, **characterised in that** the height adjustment drive (39) is a threaded spindle drive, on whose threaded spindle (41) a drive nut (42) sits, on which the adjustment element (43) is mounted pivotably.

## Revendications

1. Dispositif de réglage pour colonnes de direction de véhicules, avec un train de direction (2) modifiable en longueur, sur lequel peut être raccordé un élément de direction (1) et avec au moins une unité d'entraînement (27) pour le réglage en longueur du train de direction (2), qui comporte un tube de guidage (13), qui comporte une fente (25) passant axialement à travers laquelle dépasse un élément d'entraînement relié fermement au tube intérieur (6), qui est relié en entraînement à l'unité d'entraînement (27) et qui est relié non déplaçable à un support (33) et dans lequel dépasse un tube intérieur (6) axialement déplaçable, qui peut être relié à l'élément de direction (1) et qui est relié en entraînement à l'unité d'entraînement (27), qui est un système d'entraînement à broche filetée sur la broche filetée (28) duquel est logé un écrou d'entraînement (29), qui est relié fermement à l'élément d'entraînement, **caractérisé en ce que** l'extrémité libre de la broche filetée (28) est logée pouvant tourner dans un palier (30), qui est fixé sur une bague de réglage de course (31) qui entoure le tube intérieur (6) et est fixée sur l'extrémité libre du tube de guidage (13).

2. Dispositif de réglage selon la revendication 1,
**caractérisé en ce que** le train de direction (2) est relié au support (33) pouvant pivoter autour d'un axe de pivotement (32) et **en ce que** le tube de guidage (13) est relié à la bague de réglage de course (31) à distance de l'axe de pivotement (32) sur laquelle est logé un élément de réglage (43) pouvant pivoter autour d'un autre axe (55), qui se situe parallèlement à l'axe de pivotement (32).

3. Dispositif de réglage selon la revendication 2,
**caractérisé en ce que** l'élément de réglage (43) est relié en entraînement à un système d'entraînement de réglage en hauteur ((39).

4. Dispositif de réglage selon la revendication 2 ou 3, **caractérisé en ce que** l'élément de réglage (43) est logé pouvant pivoter sur le support (33) autour d'un axe de pivotement (44)

5. Dispositif de réglage selon la revendication 4,
**caractérisé en ce que** l'axe de pivotement (44) de l'élément de réglage (43) se situe parallèlement à l'autre axe de pivotement (55).

6. Dispositif de réglage selon l'une quelconque des revendications 2 à 5, **caractérisé en ce que** l'élément de réglage (43) comporte un bras de levier (45) s'écartant passant transversalement à son axe de pivotement (44) sur lequel vient en prise le système d'entraînement de réglage en hauteur (39).

7. Dispositif de réglage selon l'une quelconque des revendications 2 à 6, **caractérisé en ce que** l'élément de réglage (43) entoure en partie la bague de réglage de course (31).

8. Dispositif de réglage selon l'une quelconque des revendications 2 à 7, **caractérisé en ce que** l'élément de réglage (43) comporte au moins un guidage coulissant (52, 52') dans lequel vient en prise au moins une pièce coulissante (51, 51') attribuée à la bague de réglage de course (31).

9. Dispositif de réglage selon la revendication 8,
**caractérisé en ce que** le guidage coulissant (52, 52') passe perpendiculairement à l'axe de pivotement (44) de l'élément de réglage (43).

10. Dispositif de réglage selon la revendication 8 ou 9,
**caractérisé en ce que** l'élément de réglage (43) comporte des guidages coulissants (52, 52') diamétralement opposés l'un à l'autre, dans lesquels viennent en prise les pièces coulissantes (51, 51') de l'élément de réglage de course (31).

11. Dispositif de réglage selon l'une quelconque des revendications 2 à 10, **caractérisé en ce que** l'intervalle entre l'axe de pivotement (44) de l'élément de réglage (43) et l'autre axe (55) de la bague de réglage de course (31) est plus petit que l'intervalle entre l'axe de pivotement (32) du train de direction (2) et l'autre axe (55) et/ou l'axe de pivotement (44) de l'élément de réglage (43).

12. Dispositif de réglage selon l'une quelconque des revendications 8 à 12, **caractérisé en ce que** le guidage coulissant (52, 52') et la pièce coulissante (51, 51') permettent une compensation axiale (62) en faisant pivoter le train de direction (2) lors de son réglage en hauteur.

13. Dispositif de réglage selon l'une quelconque des revendications 2 à 12, **caractérisé en ce que** le système d'entraînement de réglage en hauteur (39) est un système d'entraînement à broche filetée (41), broche filetée (41) sur laquelle est placé un écrou d'entraînement (42) sur lequel est logé pouvant pivoter l'élément de réglage (43).
